# EUROPÄISCHE PATENTSCHRIFT

(11) **EP 3 310 149 B1**
(45) Veröffentlichungstag und Bekanntmachung des Hinweises auf die Patenterteilung: **05.06.2019**
(21) Anmeldenummer: 17772618.9
(22) Anmeldetag: 08.09.2017
(51) Int. Cl.: A01C 7/08

(54) **VORRICHTUNG ZUR VERTEILUNG KÖRNIGEN GUTS AUF EINE VERÄNDERLICHE ANZAHL VON LEITUNGEN**
DEVICE FOR DISTRIBUTING GRANULAR MATERIAL TO A VARIABLE NUMBER OF LINES
DISPOSITIF POUR RÉPARTIR UN PRODUIT EN GRAINS SUR UN NOMBRE VARIABLE DE CONDUITES

(30) Priorität: 09.09.2016 DE 102016010954
(43) Veröffentlichungstag der Anmeldung: 25.04.2018
(73) Patentinhaber: Funck, Gerald, 74193 Schwaigern-Stetten (DE)
(72) Erfinder: Funck, Gerald, 74193 Schwaigern-Stetten (DE)
(74) Vertreter: Dennemeyer & Associates S.A.
(86) Internationale Anmeldenummer: PCT/EP2017/072545
(87) Internationale Veröffentlichungsnummer: WO 2018/046639

(56) Entgegenhaltungen:
- WO-A1-2013/063682
- DE-A1- 10 210 010
- DE-A1-102009 031 066

## Beschreibung

### Gebiet der Erfindung

Die vorliegende Erfindung betrifft eine Vorrichtung zur Verteilung körnigen Guts auf eine veränderliche Anzahl von Leitungen, insbesondere Saatleitungen, gemäß dem Oberbegriff des Anspruchs 1.

### Stand der Technik

Eine effektive Ressourcenschonung wird in der Landwirtschaft durch eine möglichst exakte Dosierung und ortsgenaue Zuordnung auf oder in den Boden während der Ausbringung erhalten. Dies trifft sowohl für flüssig, als auch für fest ausgebrachte Stoffe zu. Beispielsweise kann hierdurch bei der Ausbringung von Saatgut eine optimale Standraumzuteilung der einzelnen Pflanzen, einhergehend mit einem geringen Saatgutverbrauch erzielt werden.

Beispielsweise bei der auch als Drillsaat bezeichneten Reihensaat, ebenso wie bei der Mulch- und der Direktsaat ist es hierzu erforderlich, Samenkörner zu gleichen Anteilen und in gleichbleibender Menge mehreren parallel verlaufenden Särinnen oder -streifen zuzuführen. Die gleichbleibende Menge bezieht sich hierbei auf einen im Wesentlichen gleichbleibenden Quotienten von den einzelnen Särinnen zugeführten und darin abgelegten Samenkörnern über der Zeit.

Von Feldspritzen mit einer Vielzahl an quer zur Fahrtrichtung einer landwirtschaftlichen Maschine auskragenden Auslegern angeordneten Einzeldüsen ist bekannt, einzelne oder Gruppen von Düsen individuell bedarfsweise zu- und abzuschalten, beispielsweise wenn diese über einen bereits behandelten Bodenabschnitt ragen, oder der momentan unter diesen befindliche Bodenabschnitt keine Behandlung erfahren soll.

Für die Verteilung von im Wesentlichen Körner umfassenden körnigen Guts, beispielsweise Saatgut, auf mehrere Ausbringungsorgane oder -einrichtungen, wie etwa Säscharen, ist ebenso eine bedarfsweise Zu- und Abschaltung einzelner Ausbringungsorgane erwünscht, beispielsweise um Fahrgassen freizuhalten oder um bei Überschneidungen mit Bodenabschnitten, in denen bereits beispielsweise eine Saatgutablage erfolgt ist, eine unwirtschaftliche doppelte Kornablage zu vermeiden.

Zur Verteilung körnigen Guts auf mehrere Ausbringungsorgane oder - einrichtungen, wie beispielsweise Säscharen ist bekannt, aus einem einen Vorrat beherbergenden Reservoir Körner umfassendes körniges Gut beispielsweise mittels eines Zellenrads und/oder einer VenturiDüse einem Luftstrom zuzudosieren. Der so erhaltene Mischstrom aus dem als Trägermedium dienenden Luftstrom und dem zudosierten körnigen Gut wird anschließend einem Verteiler zugeführt. Von dem Verteiler gehen mehrere Verteilerleitungen ab. Jede dieser Verteilerleitungen mündet an einem von mehreren beispielsweise an quer zur Fahrtrichtung einer landwirtschaftlichen Maschine auskragenden Auslegern angeordneten Ausbringungsorganen, beispielsweise Säscharen.

Durch DE 4411 240 C2 ist bekannt, schwenkbare Klappen oder vertikal bewegliche Schieber in einem Verteiler vorzusehen, um einzelne, vom Verteiler abgehende Verteilerleitungen abzusperren. Die Klappen oder Schieber schließen dabei in Offenstellung bündig mit einer zu einer Verteilerleitung führenden Kanal bildenden Wandung ab, ohne in den Verteilerraum zu ragen. Auch hier verändert sich die Konzentration des in die offen verbleibenden Verteilerleitungen abgegebenen körnigen Guts durch die Absperrung im Verteiler. Mit der Abschaltung kann somit weder eine gleichbleibende Mengenabgabe, noch eine gleichmäßige Verteilung auf die offen verbleibenden Leitungen sichergestellt werden.

Durch DE 102 10 010 A1 ist bekannt, eine Absperrung in oder am Ende oder am Anfang der von einem Verteiler abgehenden Verteilerleitungen, oder im Verteiler vorzusehen. Eine Absperrung im Verteiler sieht vor, gleichzeitig mehrere von einem Verteiler abgehende Verteilerleitungen abzusperren, indem ein Schieber in Richtung parallel zur Einströmrichtung des Mischstroms aus dem als Trägermedium dienenden Luftstrom und dem zudosierten körnigen Gut in einen vom Verteiler beherbergten Verteilerraum eingeschoben wird. Dieser Schieber ist mit radialem Abstand zu den vom Verteilerraum abgehenden Anschlüssen der Verteilerleitungen angeordnet. Der Verteiler weist hierzu an den Anschlüssen der Verteilerleitungen zum Verteilerraum einen größeren Innendurchmesser auf, als an in einem Eintrittsquerschnitt des Mischstroms in den Verteilerraum, wobei um den Schieber herum ein Ringraum verbleibt, von dem aus die Anschlüsse der Verteilerleitungen radial zur Einströmrichtung des Mischstroms gesehen nach außen abgehen. Der Schieber weist die Form eines zum Ringraum konzentrischen Zylinders auf.

Durch DE 196 13 785 C2 ist eine Verteilmaschine bekannt, bei der Sperrmittel vorgesehen sind, um die Abgabe körnigen Guts an einzelne oder Gruppen von an vom Verteiler abgehende Verteilerleitungen angeschlossene Ausbringungsorgane bedarfsweise zu unterbinden. Körniges Gut, das einer abgesperrten Verteilerleitung zugeführt wird, wird über einen Ableitstutzen abgeführt. Der Ableitstutzen ist mit einer Rückführungsleitung verbunden, die das körnige Gut wieder dem Reservoir zuführt oder dem Mischstrom wieder beimengt.

Durch DE 10 2009 031 066 A1 ist ein Verteiler mit mehreren von diesem abgehenden Verteilerleitungen bekannt. Die Verteilerleitungen sind auf halber Höhe gleichmäßig über den Umfang verteilt an einen an seinen gegenüberliegenden Stirnseiten offenen, hohlzylinderförmigen Außenring angeschlossen. Der Außenring ist konzentrisch zu einem hohlzylinderförmigen Verteilergehäuse mit einer Eintrittsöffnung entlang dessen Hohlzylinderachse verschiebbar angeordnet. In einer die gegenüberliegenden Stirnseiten des Verteilergehäuses miteinander verbindenden Gehäusewandung sind in zwei entlang der Hohlzylinderachse versetzten, normal zur Hohlzylinderachse und parallel zueinander liegenden Abgabequerschnitten über den Umfang verteilt Abgabefenster in Übereinstimmung mit den Umfangspositionen der Verteilerleitungen am Außenring angeordnet. In einem ersten Abgabequerschnitt sind dabei eine der Anzahl der Verteilerleitungen entsprechende Zahl von Abgabefenstern angeordnet. In einem zweiten Abgabequerschnitt ist eine geringere Zahl von Abgabefenstern angeordnet. Durch eine Verschiebung des Außenrings entlang der Hohlzylinderachse werden entweder die Abgabefenster des ersten Abgabequerschnitts in Übereinstimmung mit den an den Außenring angeschlossenen Verteilerleitungen gebracht, wobei jeder Verteilerleitung ein Abgabefenster zugeordnet ist und damit eine Abgabe an alle Verteilerleitungen stattfindet, oder die Abgabefenster des zweiten Abgabequerschnitts in Übereinstimmung mit nur einem Teil den an den Außenring angeschlossenen Verteilerleitungen gebracht, wobei nicht jeder Verteilerleitung ein Abgabefenster zugeordnet wird und somit eine Abgabe nur an diejenigen Verteilerleitungen erfolgt, welchen im zweiten Abgabequerschnitt ein Abgabefenster zugeordnet ist.

Dem Stand der Technik gemein ist der Bedarf zusätzlicher, über die zur gleichmäßigen Verteilung körnigen Guts auf mehrere Leitungen erforderliche Anzahl von beweglichen Bauteilen hinausgehende Anzahl beweglicher Bauteile. Dies hat mit steigender Anzahl beweglicher Bauteile zunehmendem konstruktiven Aufwand höhere Kosten für Herstellung, Montage, Wartung sowie eine mit steigender Anzahl beweglicher Bauteile zunehmende Ausfallwahrscheinlichkeit einhergehend mit einer geringeren Betriebssicherheit zur Folge.

### Aufgabe

Eine Aufgabe der Erfindung ist die Angabe einer die Nachteile des Standes der Technik ausräumenden Vorrichtung zur Verteilung im Wesentlichen Körner umfassenden körnigen Guts auf eine veränderliche Anzahl von Leitungen, insbesondere Saatleitungen. Insbesondere ist es eine Aufgabe der Erfindung, eine Vorrichtung zur Verteilung im Wesentlichen Körner umfassenden körnigen Guts auf eine veränderliche Zahl von Leitungen zu schaffen, welche mit möglichst wenig beweglichen Teilen ohne den beim Stand der Technik erforderlichen hohen konstruktiven Aufwand, insbesondere ohne dessen Vielzahl zusätzlicher beweglicher und dadurch nur eingeschränkt langzeitbetriebssicherer Teile auskommt und eine gleichmäßige Verteilung auf beispielsweise zu Ausbringungsorganen führende Leitungen ermöglicht.

### Lösung

Die obige Aufgabe wird gelöst durch die Merkmale des unabhängigen Anspruchs. Weitere vorteilhafte Ausgestaltungen werden durch die Unteransprüche beschrieben.

Es ist ersichtlich, dass die Erfindung verwirklicht sein kann, indem die auf unterschiedliche Anzahlen von Leitungen beziehungsweise auf eine veränderbare Anzahl von Leitungen zu verteilenden Körner beispielsweise in einem kontinuierlichen Körnerstrom einem vorzugsweise trommelförmigen Rotor zugeführt werden, welcher um eine Drehachse drehbar angeordnet ist.

Die Körner werden im Rotor entlang dessen die Drehachse bildenden Längsachse bewegt. Die Bewegung findet hierbei zumindest mit einer Bewegungskomponente in Richtung entlang der Längsachse statt. Ist der Rotor beispielsweise konvergent oder divergent gestaltet, kann der Bewegungskomponente in Richtung entlang der Längsachse eine Bewegungskomponente hin oder weg von der Längsachse überlagert sein.

Der Rotor umfasst mindestens eine radial nach innen zur Drehachse hin gerichtete anschiebende Wand. Sind mehr als eine anschiebende Wand vorgesehen, so sind die anschiebenden Wände vorzugsweise gleichmäßig über den Umfang des Rotors verteilt angeordnet.

Durch Drehung des Rotors um die Drehachse versetzt die mindestens eine anschiebende Wand die zu verteilenden Körner zusätzlich zu ihrer Bewegung entlang der Drehachse in Rotation um die Drehachse.

In dem Rotor werden hierbei die Körner von den anschiebenden Wänden im Kreis bewegt. Je nach Drehrichtung legen sich die Körner dabei an unterschiedliche Seiten der einen oder mehreren anschiebenden Wände an.

Zur Bewegungskomponente der Körner in Richtung entlang der Längsachse gesellt sich damit eine Bewegungskomponente um die Längsachse herum.

In welchem der Abgabequerschnitte die Körner abgegeben werden, wird durch die Seite der anschiebenden Wand festgelegt. Schiebt die anschiebende Wand mit ihrer einen Seite die Körner an, so erfolgt die Abgabe in dem einen Abgabequerschnitt, schiebt die anschiebende Wand die Körner mit ihrer anderen Seite an, so erfolgt die Abgabe entweder nur in dem anderen Abgabequerschnitt oder zusätzlich in dem anderen Abgabequerschnitt.

Welche der beiden Seiten der anschiebenden Wand die Körner anschiebt, wird durch die Drehrichtung des Rotors bestimmt.

Um die Körner über einen Abgabequerschnitt hinwegzuheben, sind radiale Begrenzungen vorgesehen, die an den gegenüberliegenden Seiten der anschiebenden Wände in unterschiedlichen Positionen entlang der eine Längsachse bildenden Drehachse gesehen angeordnet sind. Die radialen Begrenzungen können entweder durch seitlich von den anschiebenden Wänden im Bereich eines zu überspringenden Abgabequerschnitts abstehende Flügel gebildet sein, oder sie können beispielsweise durchgängig ausgebildet und zumindest im Bereich einer erwünschten Kornabgabe beispielsweise durch Abgabefenster unterbrochen sein.

Durch eine Abgabe der Körner in die verschiedene Abgabequerschnitte bildende beispielsweise erste oder zweite Ebene kann festgelegt werden, welche von den in der oder den entsprechenden Ebenen angeschlossenen Zahlen von Leitungen bedient werden sollen.

Sind mehr als zwei Ebenen und dementsprechend mehr als zwei Abgabequerschnitte vorgesehen, so werden in wenigstens einer Drehrichtung des Rotors zwei oder mehr Ebenen mit den in diesen angeschlossenen Leitungen bedient. Dies kann beispielsweise zum Erhalt einer Gleichverteilung auf mehrere Leitungen vorteilhaft sein, und/oder zur Verteilung bei entsprechend hoher Zahl angeschlossener Leitungen, die beispielsweise in einer Ebene nicht mehr oder nur unter erschwerten Bedingungen, beispielsweise erhöhtem konstruktivem Aufwand bedient werden könnten.

Vorteile gegenüber dem Stand der Technik ergeben sich neben einer vollständigen Lösung der gestellten Aufgabe durch eine Umschaltung einer gleichmäßigen Verteilung körnigen Guts auf eine erste Zahl von Leitungen, beispielsweise Saatleitungen, auf eine von der ersten Zahl verschiedene zweite Zahl von Leitungen, beispielsweise Saatleitungen, ohne den Bedarf von über die zum Erhalt einer gleichmäßigen Verteilung körnigen Guts auf mehrere Leitungen erforderliche Anzahl beweglicher Teile hinaus.

Zusätzliche Vorteile ergeben sich durch eine hohe Güte der Gleichverteilung des körnigen Guts auf die kurz als aktive Verteilerleitungen bezeichneten, in der jeweiligen Drehrichtung bedienten angeschlossenen Leitungen, einhergehend mit einer verbesserten Kornablage und Standraumzuteilung sowie einem geringeren Verbrauch körnigen Guts.

Die Erfindung kann einzelne oder mehrere einleitend in Verbindung mit dem Stand der Technik oder den hierzu zitierten Dokumenten erwähnte Merkmale aufweisen.

Die Erfindung wird nachfolgend anhand in der Zeichnung dargestellter Ausführungsbeispiele näher erläutert. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung ausgestaltet sein kann und stellen keine abschließende Begrenzung dar. Es zeigen in schematischer Darstellung:
- Fig. 1: ein erstes Ausführungsbeispiel einer Vorrichtung zur Verteilung körnigen Guts auf eine veränderliche Anzahl von Leitungen in längs geschnittener, perspektivischer Ansicht.
- Fig. 2: ein zweites Ausführungsbeispiel einer Vorrichtung zur Verteilung körnigen Guts auf eine veränderliche Anzahl von Leitungen in teilweise längs geschnittener, perspektivischer Ansicht.

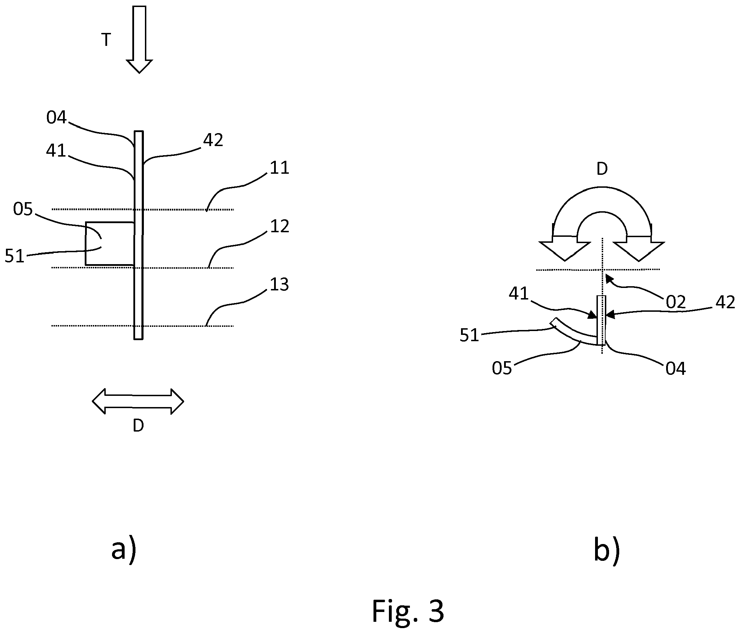

- Fig. 3: ein erstes Ausführungsbeispiel einer anschiebenden Wand mit einem an dieser angeordneten Flügel, der eine in einer ersten Drehrichtung in Fig. 3 a) nach links in der zwischen Eintrittsöffnung und erster Ebene liegenden zweiten Ebene der beiden verschiedenen, in Fig. 3 a) durch gestrichelte Linien voneinander abgegrenzten ersten und zweiten Ebenen wirksame radiale Begrenzung bildet für in Pfeilrichtung entlang der Längsachse transportiertes und in einer der beiden durch Doppelpfeil angedeuteten, entgegengesetzten Drehrichtungen normal hierzu vermittels der anschiebenden Wand in Drehbewegung um die Längsachse angeschobenes körniges Gut, in Fig. 3 a) in einer Ansicht radial weg von der durch die Längsachse gebildeten Drehachse gesehen und in Fig. 3 b) in einer Ansicht entlang der durch die in Fig. 3 b) im Kreuzungspunkt der gestrichelten Linien liegende Längsachse gebildeten Drehachse gesehen, wobei der auf einer ersten Seite der anschiebenden Wand angeordnete Flügel einen Abschnitt einer die rotationssymmetrische Partie des Gehäuseinnenraums zumindest im Bereich der zweiten Auslassöffnung nachbildenden Mantelfläche umfasst.

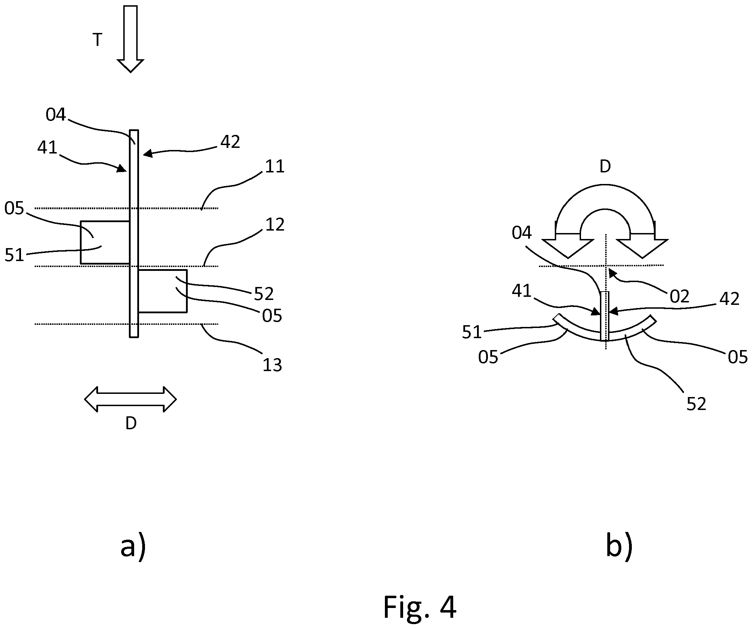

- Fig. 4: ein zweites Ausführungsbeispiel einer anschiebenden Wand mit zwei auf gegenüberliegenden Seiten an dieser angeordneten Flügeln, die radiale Begrenzungen bilden für in Pfeilrichtung entlang der Längsachse transportiertes und in einer der beiden durch Doppelpfeil angedeuteten, entgegengesetzten Drehrichtungen normal hierzu vermittels der anschiebenden Wand in Drehbewegung um die Längsachse angeschobenes körniges Gut, wobei einer der beiden Flügel eine beim Anschieben vermittels der anschiebenden Wand in einer ersten Drehrichtung in Fig. 4 a) nach links in der zwischen Eintrittsöffnung und erster Ebene liegenden zweiten Ebene der beiden verschiedenen, in Fig. 4 a) durch gestrichelte Linien voneinander abgegrenzten ersten und zweiten Ebenen wirksame radiale Begrenzung bildet, und der andere eine beim Anschieben vermittels der anschiebenden Wand in einer zweiten Drehrichtung in Fig. 4 a) nach rechts in der von der Eintrittsöffnung entfernten ersten Ebene wirksame radiale Begrenzung bildet, in Fig. 4 a) in einer Ansicht radial weg von der durch die Längsachse gebildeten Drehachse gesehen und in Fig. 4 b) in einer Ansicht entlang der durch die in Fig. 4 b) im Kreuzungspunkt der gestrichelten Linien liegende Längsachse gebildeten Drehachse gesehen, wobei in Fig. 4 zusätzlich zu dem auf der ersten Seite der anschiebenden Wand angeordneten Flügel gemäß Fig. 3, der einen Abschnitt einer die rotationssymmetrische Partie des Gehäuseinnenraums zumindest im Bereich der zweiten Auslassöffnung nachbildenden Mantelfläche umfasst, auf einer der ersten Seite gegenüberliegenden zweiten Seite der anschiebenden Wand ebenfalls ein Flügel angeordnet ist, der einen Abschnitt einer die rotationssymmetrische Partie des Gehäuseinnenraums zumindest im Bereich der ersten Auslassöffnung nachbildende Mantelfläche umfasst.

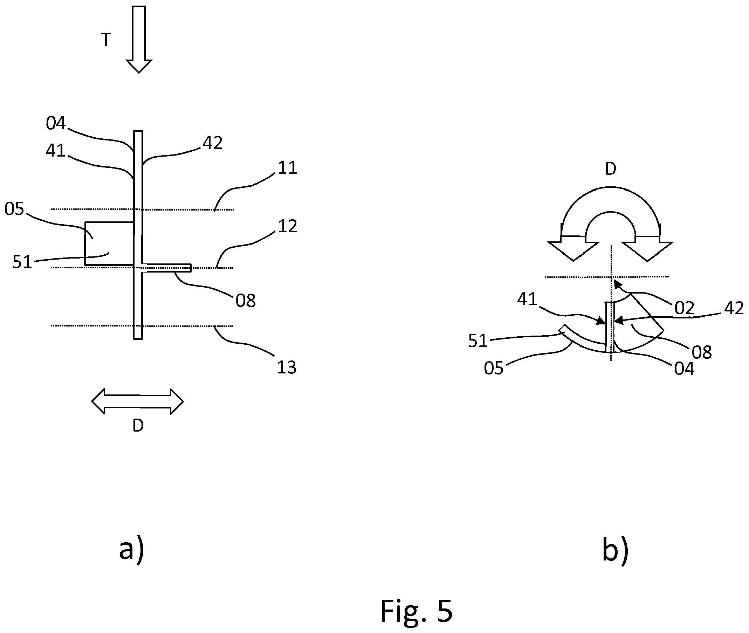

- Fig. 5: ein drittes Ausführungsbeispiel einer anschiebenden Wand mit zwei auf gegenüberliegenden Seiten an dieser angeordneten Flügeln, von denen der eine beim Anschieben in einer ersten Drehrichtung in Fig. 5 a) nach links eine in der zwischen Eintrittsöffnung und erster Ebene liegenden zweiten Ebene der beiden verschiedenen, in Fig. 5 a) durch gestrichelte Linien voneinander abgegrenzten ersten und zweiten Ebenen wirksame radiale Begrenzung bildet für in Pfeilrichtung entlang der Längsachse transportiertes und in einer der beiden durch Doppelpfeil angedeuteten, entgegengesetzten Drehrichtungen normal hierzu vermittels der anschiebenden Wand in Drehbewegung um die Längsachse angeschobenes körniges Gut, und von denen der andere beim Anschieben in einer der ersten Drehrichtung entgegengesetzten zweiten Drehrichtung in Fig. 5 a) nach rechts eine das körnige Gut an einem zumindest teilweisen Weitertransport entlang der Längsachse hin zu einer ersten Auslassöffnung hindernde axiale Begrenzung bildet, in Fig. 5 a) in einer Ansicht radial weg von der durch die Längsachse gebildeten Drehachse gesehen und in Fig. 5 b) in einer Ansicht entlang der durch die in Fig. 5 b) im Kreuzungspunkt der gestrichelten Linien liegende Längsachse gebildeten Drehachse gesehen, wobei in Fig. 5 zusätzlich zu dem auf der ersten Seite der anschiebenden Wand angeordneten Flügel gemäß Fig. 3, der einen Abschnitt einer die rotationssymmetrische Partie des Gehäuseinnenraums zumindest im Bereich der zweiten Auslassöffnung nachbildenden Mantelfläche umfasst, auf einer der ersten Seite gegenüberliegenden zweiten Seite der anschiebenden Wand ebenfalls ein Flügel angeordnet ist, der eine abstehende Begrenzungswand umfasst, die in einem normal zur Längsachse angeordneten Querschnitt liegt, und die beim Anschieben des körnigen Guts mittels der zweiten Seite der anschiebenden Wand in einer der ersten Drehrichtung des Rotors um die Längsachse entgegengesetzten zweiten Drehrichtung nach rechts in Fig. 5 a) das körnige Gut an einem zumindest teilweisen Weitertransport entlang der Längsachse hin zu einer ersten Auslassöffnung hindert.

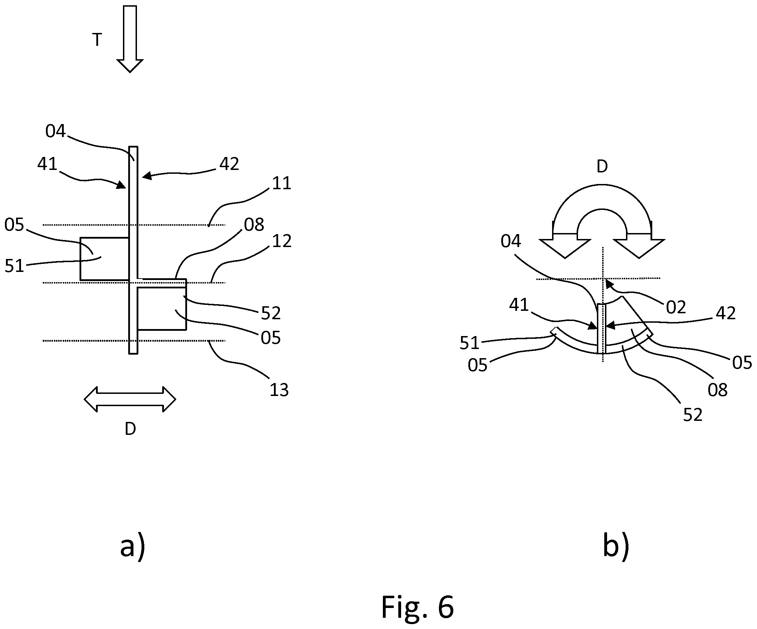

- Fig. 6: ein viertes Ausführungsbeispiel einer anschiebenden Wand mit zwei auf gegenüberliegenden Seiten an dieser angeordneten Flügeln, von denen der eine beim Anschieben in einer ersten Drehrichtung in Fig. 6 a) nach links eine in der zwischen Eintrittsöffnung und erster Ebene liegenden zweiten Ebene der beiden verschiedenen, in Fig. 6 a) durch gestrichelte Linien voneinander abgegrenzten ersten und zweiten Ebenen wirksame radiale Begrenzung bildet für in Pfeilrichtung entlang der Längsachse transportiertes und in einer der beiden durch Doppelpfeil angedeuteten, entgegengesetzten Drehrichtungen normal hierzu vermittels der anschiebenden Wand in Drehbewegung um die Längsachse angeschobenes körniges Gut, und von denen der andere beim Anschieben in einer der ersten Drehrichtung entgegengesetzten zweiten Drehrichtung in Fig. 6 a) nach rechts sowohl eine das körnige Gut an einem zumindest teilweisen Weitertransport entlang der Längsachse hin zu einer ersten Auslassöffnung hindernde axiale Begrenzung, als auch eine beim Anschieben vermittels der anschiebenden Wand in der zweiten Drehrichtung in Fig. 6 a) nach rechts in der von der Eintrittsöffnung entfernten ersten Ebene wirksame radiale Begrenzung bildet, in Fig. 5 a) in einer Ansicht radial weg von der durch die Längsachse gebildeten Drehachse gesehen und in Fig. 5 b) in einer Ansicht entlang der durch die in Fig. 5 b) im Kreuzungspunkt der gestrichelten Linien liegende Längsachse gebildeten Drehachse gesehen, wobei in Fig. 6) zusätzlich zu dem auf der ersten Seite der anschiebenden Wand angeordneten Flügel gemäß Fig. 3, der einen Abschnitt einer die rotationssymmetrische Partie des Gehäuseinnenraums zumindest im Bereich der zweiten Auslassöffnung nachbildenden Mantelfläche umfasst, auf der der ersten Seite gegenüberliegenden zweiten Seite der anschiebenden Wand ebenfalls ein Flügel angeordnet ist, der zusätzlich zu dem Abschnitt einer die rotationssymmetrische Partie des Gehäuseinnenraums zumindest im Bereich der ersten Auslassöffnung nachbildende Mantelfläche gemäß Fig. 4 eine abstehende Begrenzungswand gemäß Fig. 5 umfasst, die in einem normal zur Längsachse angeordneten Querschnitt liegt, und die beim Anschieben des körnigen Guts mittels der zweiten Seite der anschiebenden Wand in einer der ersten Drehrichtung des Rotors um die Längsachse entgegengesetzten zweiten Drehrichtung das körnige Gut an einem zumindest teilweisen Weitertransport entlang der Längsachse hin zu einer die erste Auslassöffnung umfassenden Ebene hindert.
- Fig. 7: ein drittes Ausführungsbeispiel einer Vorrichtung zur Verteilung körnigen Guts auf eine veränderliche Anzahl von Leitungen in perspektivischer Ansicht.
- Fig. 8: die Vorrichtung zur Verteilung körnigen Guts auf eine veränderliche Anzahl von Leitungen aus Fig. 4 in teilweise längs geschnittener, perspektivischer Ansicht.
- Fig. 9: eine Abwicklung einer Innenansicht des Rotors der Vorrichtung zur Verteilung körnigen Guts auf eine veränderliche Anzahl von Leitungen aus Fig. 4.
- Fig. 10: eine Detailansicht eines ersten Ausführungsbeispiels einer Vorrichtung zur Verteilung körnigen Guts auf eine veränderliche Anzahl von Leitungen mit einer in einen koaxial innerhalb eines Rotors angeordneten, axial verstellbaren und mit dem Rotor mitdrehenden Steuerring übergehenden Zufuhrleitung, in auseinander gezogener und längs geschnittener, perspektivischer Ansicht.
- Fig. 11: eine Detailansicht eines zweiten Ausführungsbeispiels einer Vorrichtung zur Verteilung körnigen Guts auf eine veränderliche Anzahl von Leitungen mit einem koaxial innerhalb des Rotors angeordneten, axial verstellbaren und mit dem Rotor mitdrehenden Steuerring, in auseinander gezogener und längs geschnittener, perspektivischer Ansicht.
- Fig. 12: ein Ablaufdiagramm eines Verfahrens zur Verteilung körnigen Guts auf eine veränderliche Anzahl von Leitungen (Beispiel, nicht Teil der beanspruchten Erfindung).

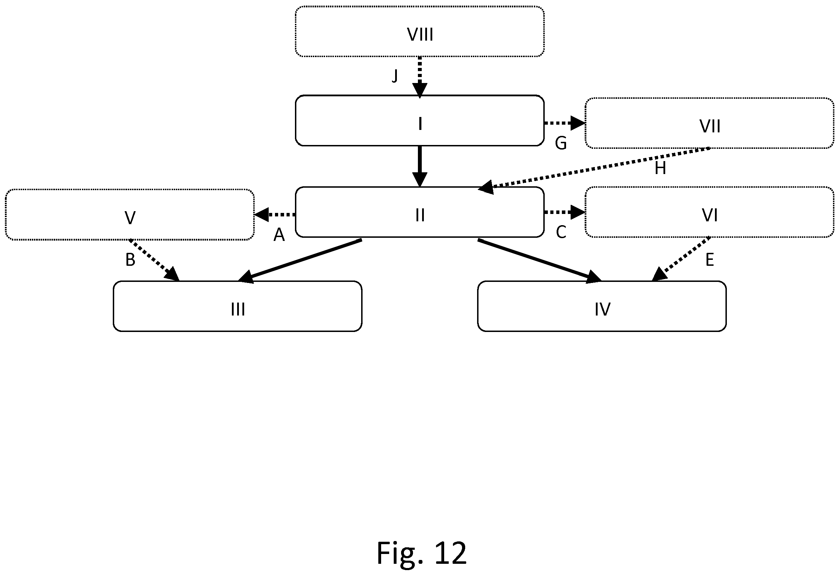

Ein in Fig. 12 in seinem Ablauf dargestelltes Verfahren ist nicht Teil der beanspruchten Erfindung, sondern dient lediglich zum besseren Verständnis derselben. Das Verfahren zur Verteilung von im Wesentlichen Körner umfassenden körnigen Guts auf eine veränderliche Anzahl von Leitungen 01 und damit auf verschiedene Anzahlen von Leitungen 01 sieht in einem ersten Verfahrensschritt I vor, das körnige Gut zumindest mit einer Bewegungskomponente entlang einer Längsachse 02 bis zu mindestens einer Ebene, auf der die Längsachse 02 normal aufsteht und in welcher eine Anzahl von Leitungen 01 abgeht, zu transportieren. In der Ebene oder im Anschluss an diese befindet sich mindestens eine Auslassöffnung 03 mit einer Anzahl an diese angeschlossener Leitungen 01, in welche das in die mindestens eine entsprechende Ebene entlang der Längsachse 02 transportierte körnige Gut abgegeben wird.

Der Begriff Ebene bezeichnet hierbei einen Abgabequerschnitt, von dem aus eine Anzahl von Leitungen abgehen, beziehungsweise ist hierbei gleichbedeutend mit einem Abgabequerschnitt. Der Abgabequerschnitt kann beispielsweise im Falle eines in Transportrichtung gesehen letzten Abgabequerschnitts tatsächlich innerhalb einer Querschnittsfläche liegen, auf welcher die Längsachse 02 normal aufsteht. Zumindest bei einem in Transportrichtung gesehen vor einem letzten Abgabequerschnitt liegenden Abgabequerschnitt handelt es sich demgegenüber um einen Mantelflächenabschnitt eines zur Längsachse 02 rotationssymmetrischen, hohlzylinderförmigen Rotationskörpers, welcher Mantelflächenabschnitt eine Erstreckung in Richtung parallel zur Längsachse 02 aufweist und in dem eine oder mehrere radial weg von der Längsachse führende Auslassöffnungen 117, 118 angeordnet sind, die wiederum in eine oder mehrere in dem entsprechenden Abgabequerschnitt abgehende Leitungen 01 münden. Beim in Transportrichtung gesehen letzten Abgabequerschnitt kann dies ebenso verwirklicht sein. Dies hat den Vorteil, dass überschüssiges körniges Gut, das gleich aus welchem Grund zuvor in keinem Abgabequerschnitt abgegeben wurde, drehrichtungsabhängig daran gehindert werden kann, in einem letzten Abgabequerschnitt abgegeben zu werden, beispielsweise weil die an den letzten Abgabequerschnitt angeschlossenen Leitungen 01 nicht bedient werden sollen. Dieses überschüssige Körnige Gut kann beispielsweise einer Wiederverwendung zugeführt werden.

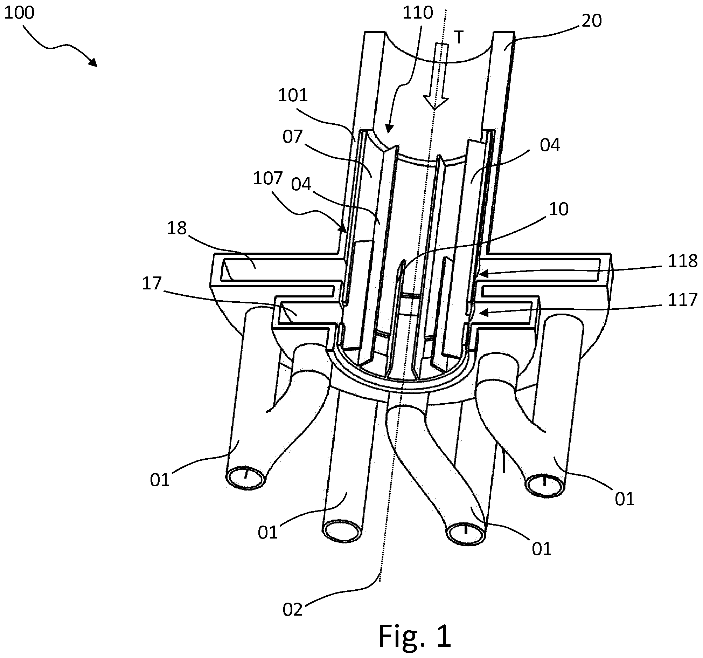

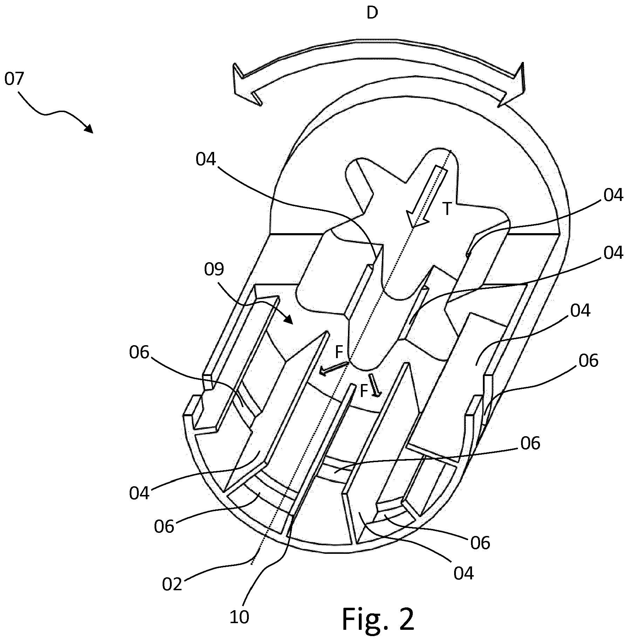

Das Verfahren sieht in einem zweiten Verfahrensschritt II vor, dem körnigen Gut während dessen in Fig. 1, Fig. 2, Fig. 3, Fig. 4, Fig. 5, Fig. 6, Fig. 9 durch Pfeile T angedeuteten Transports mit einer Bewegungskomponente entlang der Längsachse 02 durch Anschieben um die Längsachse 02 eine in Fig. 2, Fig. 3, Fig. 4, Fig. 5, Fig. 6, Fig. 9 durch Doppelpfeile D angedeutete Drehbewegung um die Längsachse 02 zu überlagern, welche das körnige Gut nach außen, weg von der Längsachse 02 drängt. Die Überlagerung der Drehbewegung wird durch Anschieben des körnigen Guts um die Längsachse 02 erzeugt.

Der Transport findet hierbei zunächst zumindest mit einer Bewegungskomponente in Richtung entlang der Längsachse 02 statt.

Durch die durch Anschieben um die Längsachse 02 erzeugte Überlagerung einer Drehbewegung um die Längsachse 02 gesellt sich damit zur Bewegungskomponente des körnigen Guts in Richtung entlang der Längsachse 02 wenigstens eine Bewegungskomponente um die Längsachse herum dazu. Darüber hinaus kann eine Bewegungskomponente in radialer Richtung beispielsweise weg von der Längsachse 02 oder hin zur Längsachse 02 überlagert sein, etwa bei einem das Anschieben um die Längsachse bei gleichzeitigem Transport entlang der Längsachse 02 mittels eines beispielsweise divergenten oder konvergenten Rotor 07. Selbstverständlich ist während des Transports auch eine konvergent-divergente Bewegung hin zur und wieder weg von der Längsachse denkbar oder umgekehrt.

Durch das Anschieben wird das körnige Gut auf einer in der jeweiligen dem Transport entlang der Längsachse 02 zu überlagernden, in Fig. 2, Fig. 3, Fig. 4, Fig. 5, Fig. 6, Fig. 9 jeweils durch einen Doppelpfeil D angedeuteten Drehrichtung vorderen Seite einer anschiebenden Wand 04 konzentriert.

Der Begriff Wand ist hierbei dahingehend zu verstehen, dass es sich hierbei um ein für körniges Gut im Wesentlichen undurchdringliches Element handelt, welches das körnige Gut in Drehbewegung um die Längsachse anschiebt. Dieses kann durch eine Platte gebildet sein, jedoch ist auch eine Verwirklichung mittels mehrerer in einer oder mehreren Reihen angeordneter Stifte oder Borsten denkbar, oder eine Kombination aus Platte und/oder Stifte und/oder Borsten.

Das Verfahren sieht dabei vor, dass abhängig davon, in welcher der beiden entgegengesetzten Drehrichtungen das körnige Gut in Drehbewegung um die Längsachse angeschoben wird, es auf unterschiedliche Anzahlen von Leitungen verteilt wird.

Es ist demnach vorgesehen, dass je nachdem von welcher Seite her beziehungsweise in welcher Drehrichtung um die Längsachse 02 das körnige Gut angeschoben wird, es bis in verschiedene Ebenen, auf denen die Längsachse 02 normal aufsteht und in denen beispielsweise unterschiedliche Anzahlen von Leitungen 01 beispielsweise radial weg von der Längsachse 02 abgehen, entlang der Längsachse 02 transportiert wird, und auf unterschiedliche Anzahlen von in den verschiedenen parallelen Ebenen, auf denen die Längsachse 02 normal aufsteht, beziehungsweise im Anschluss an die verschiedenen parallelen Ebenen beispielsweise radial abgehenden Leitungen 01 verteilt wird.

Das Verfahren sieht hierzu in einem auf den zweiten Verfahrensschritt II folgenden dritten Verfahrensschritt III vor, dass das körnige Gut in einer ersten Drehrichtung auf eine erste Anzahl von in wenigstens einer ersten Ebene abgehenden Leitungen verteilt wird. Dabei wird das im Wesentlichen Körner umfassende körnige Gut in der ersten Drehrichtung angeschoben, wobei die Abgabe auf in wenigstens einem mindestens eine erste Ebene bildenden Abgabequerschnitt angeschlossene Leitungen 01 erfolgt.

Ferner sieht das Verfahren hierzu in einem anstelle des dritten Verfahrensschritts III auf den zweiten Verfahrensschritt II folgenden vierten Verfahrensschritt IV vor, dass das körnige Gut in einer der ersten Drehrichtung entgegengesetzten zweiten Drehrichtung auf eine von der ersten Anzahl verschiedene, zweite Anzahl von zumindest in wenigstens einer zweiten Ebene abgehenden Leitungen verteilt wird. Dabei wird das im Wesentlichen Körner umfassende körnige Gut in der der ersten Drehrichtung entgegengesetzten zweiten Drehrichtung angeschoben, wobei die Abgabe entweder nur auf in wenigstens einem mindestens eine zweite Ebene bildenden Abgabequerschnitt angeschlossene Leitungen 01 erfolgt, oder zusätzlich zu auf in wenigstens einem mindestens eine erste Ebene bildenden Abgabequerschnitt angeschlossene Leitungen 01 auf in wenigstens einem mindestens eine zweite Ebene bildenden Abgabequerschnitt angeschlossene Leitungen 01 erfolgt.

In welchem der Abgabequerschnitte die Körner abgegeben werden, wird demnach durch die Drehrichtung festgelegt. Werden die Körner in der einen Drehrichtung um die Längsachse 02 angeschoben, so erfolgt die Abgabe auf die in dem einen Abgabequerschnitt angeschlossenen Leitungen 01. Werden die Körner in der anderen Drehrichtung um die Längsachse 02 angeschoben, so erfolgt die Abgabe entweder nur auf die in dem anderen Abgabequerschnitt angeschlossenen Leitungen 01 oder zusätzlich auf die in dem anderen Abgabequerschnitt angeschlossenen Leitungen 01.

Zusammengefasst sieht das Verfahren zur Verteilung Körner umfassenden körnigen Guts auf eine veränderliche Anzahl von Leitungen 01 vor, dass das körnige Gut entlang einer Längsachse 02 transportiert wird, es während seines Transports entlang der Längsachse 02 in Rotation um diese angeschoben wird, und es je nachdem, in welcher Drehrichtung um die Längsachse 02 es angeschoben wird, auf eine erste Anzahl von in mindestens einer ersten Ebene, auf der die Längsachse 02 normal aufsteht, abgehende Leitungen 01 oder auf eine zweite Anzahl von zumindest in mindestens einer parallel zur ersten Ebene liegenden zweiten Ebene, auf der die Längsachse ebenfalls normal aufsteht, abgehende Leitungen 01 verteilt wird, so dass es beim Anschieben in einer ersten Drehrichtung um die Längsachse 02 auf die erste Anzahl von in der mindestens einen ersten Ebene abgehender Leitungen 01 und beim Anschieben in einer der ersten Drehrichtung entgegengesetzten, zweiten Drehrichtung um die Längsachse auf die zweite Anzahl von zumindest in der mindestens einen zweiten Ebene abgehender Leitungen 01 verteilt wird.

In welcher Ebene die Körner abgegeben werden, wird durch die Drehrichtung festgelegt. In einer ersten Drehrichtung erfolgt die Abgabe entweder in der mindestens einen ersten Ebene oder in der mindestens einen zweiten Ebene. In der anderen Drehrichtung erfolgt die Abgabe entweder nur in der mindestens einen zweiten Ebene oder nur in der mindestens einen ersten Ebene, oder zusätzlich zu der mindestens einen zweiten Ebene in der mindestens einen ersten Ebene.

Wichtig ist in diesem Zusammenhang hervorzuheben, dass im vorliegenden Dokument der Begriff Achse im Gegensatz zu dem Begriff Welle eine geometrische Achse und nicht ein Maschinenelement bezeichnet.

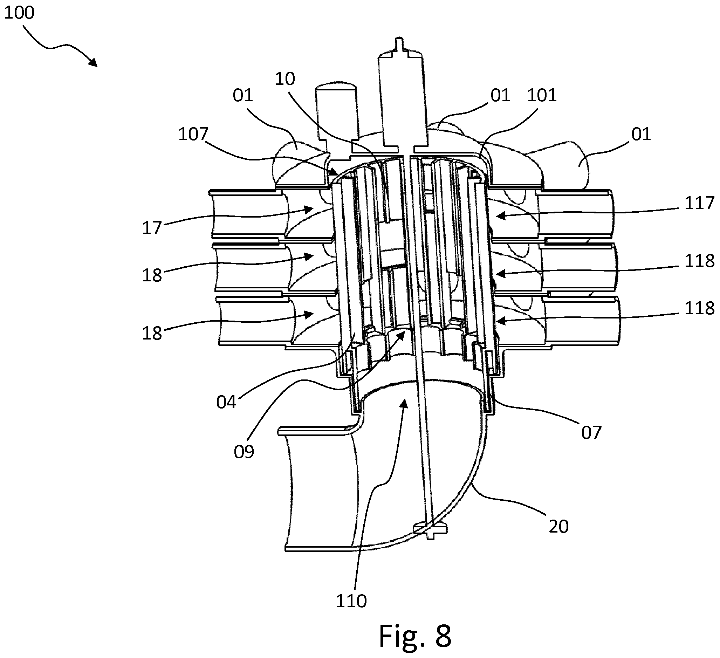

Ebenso wichtig ist in diesem Zusammenhang hervorzuheben, dass der Begriff Ebene hierbei nicht zwingend einer mathematischen Definition im Sinne einer einen zweidimensionalen Vektorraum aufspannenden Fläche entsprechen muss, sondern vielmehr einen zwischen zwei parallelen Flächen liegenden Abschnitt eines sich entlang der Längsachse 02 erstreckenden, konzentrisch zur Längsachse 02 angeordneten hohlzylinderförmigen Rotationskörpers umfassen kann, dessen Mantelfläche beispielsweise teilweise Mündungsflächen abgehender Leitungen 01 umfassen kann und/oder welcher Rotationskörper einen konzentrisch zur Längsachse 02 angeordneten Sammelkanal 17, 18 (Fig. 1, Fig. 8) umfassen kann, an welchen wiederum Leitungen 01 angeschlossen sind beziehungsweise von dem wiederum eine Anzahl von an diesen angeschlossenen Leitungen 01 abgehen.

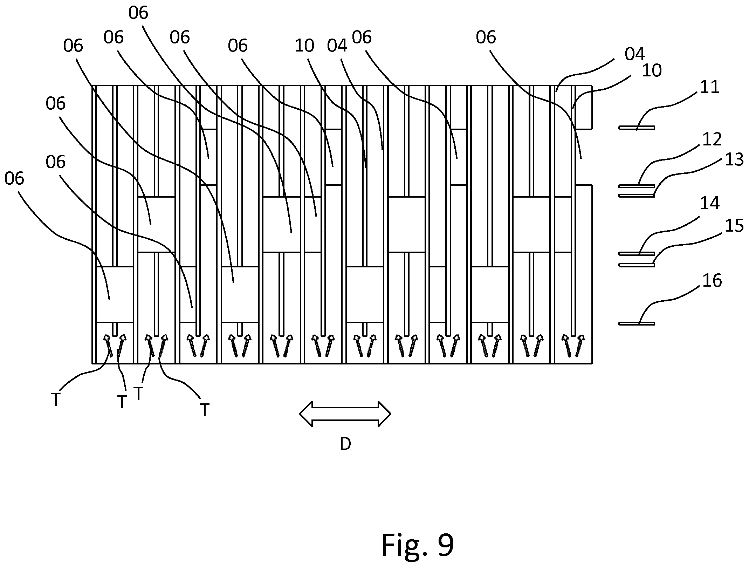

So kann es sich beispielsweise um eine Ebene im Sinne der mathematischen Definition im Falle einer letzten vom entlang der Längsachse 02 transportierten körnigen Gut erreichten ersten Ebene handeln, von wo aus es in dort beispielsweise zum Teil in Transportrichtung abgehende Leitungen abgegeben wird. Zumindest eine in in Fig. 1, Fig. 2, Fig. 3, Fig. 4, Fig. 5, Fig. 6, Fig. 9 durch Pfeile T angedeuteten Transportrichtung gesehen vor einer letzten ersten Ebene liegende Ebene entspricht demgegenüber nicht einer mathematischen Ebene, sondern vielmehr einem Abschnitt eines zwischen durch gestrichelte Linien in Fig. 3, Fig. 4, Fig. 5, Fig. 6 dargestellten parallelen Flächen 11, 12 beziehungsweise 12, 13 sowie in Fig. 9 angedeuteten Flächen 11, 12, 13, 14, 15, 16 liegenden Rotationskörpers mit einer Erstreckung entlang der Längsachse 02.

Vorteilhaft sieht das Verfahren zur Verteilung des im Wesentlichen Körner umfassenden körnigen Guts auf veränderliche Anzahlen von Leitungen 01 vor, dass in einer ersten Drehrichtung das körnige Gut bis zum Erreichen mindestens einer ersten Ebene über mindestens eine in Transportrichtung entlang der Längsachse 02 gesehen vor dieser liegende zweite Ebene hinwegtransportiert wird, und in einer entgegengesetzten, zweiten Drehrichtung am Ende einer zweiten Ebene entweder am Weitertransport hin zu einer nachfolgenden ersten Ebene entlang der Längsachse 02 gehindert, und/oder über die mindestens eine nachfolgende erste Ebene hinweg weiter transportiert wird.

Hierzu kann das Verfahren in einem wie in Fig. 12 durch gestrichelte Pfeile A und B dargestellt zwischen dem zweiten Verfahrensschritt II und dem dritten Verfahrensschritt III liegenden fünften Verfahrensschritt V vorsehen, dass bei Drehung in der ersten Drehrichtung das körnige Gut bis zum Erreichen mindestens einer ersten Ebene über mindestens eine in Transportrichtung entlang der Längsachse 02 gesehen vor dieser liegende zweite Ebene hinwegtransportiert wird.

In einem wie in Fig. 12 durch gestrichelte Pfeile C und E dargestellt zwischen dem zweiten Verfahrensschritt II und dem vierten Verfahrensschritt IV liegenden sechsten Verfahrensschritt VI sieht das Verfahren hierzu vor, dass bei Drehung in der der ersten Drehrichtung entgegengesetzten, zweiten Drehrichtung das körnige Gut am Ende einer zweiten Ebene entweder am Weitertransport hin zu einer nachfolgenden ersten Ebene entlang der Längsachse 02 gehindert, und/oder über die mindestens eine nachfolgende erste Ebene hinweg weiter transportiert wird.

Vorteilhaft sieht das Verfahren hierzu vor, dass ein größtmöglicher radialer Abstand des körnigen Guts radial weg von der Längsachse 02 zumindest entlang eines Abschnitts der Längsachse 02 beschränkt wird, wobei die radiale Begrenzung in den entgegengesetzten Drehrichtungen in verschiedenen Ebenen, auf denen die Längsachse 02 normal aufsteht, beziehungsweise im Anschluss hieran aufgehoben wird.

Das körnige Gut unterliegt hierbei beim Anschieben in die Drehbewegung um die Längsachse entlang eines Abschnitts der Längsachse 02 einer Begrenzung seines größtmöglichen Abstands radial weg von der Längsachse. Durch die Drehbewegung drängt sich das körnige Gut an die Begrenzung. Das an die Begrenzung gedrängte körnige Gut wird in der einen Drehrichtung von der einen Seite her in Drehung um die Längsachse 02 angeschoben und in der entgegengesetzten Drehrichtung von der anderen Seite her in Drehung um die Längsachse 02 angeschoben.

Eine solche radiale Beschränkung kann beispielsweise zumindest teilweise vermittels einer einen Gehäuseinnenraum umgebenden Gehäusewandung eines Gehäuses vorgenommen sein.

Die Begrenzung wird in den entgegengesetzten Drehrichtungen in verschiedenen Ebenen, auf denen die Längsachse 02 normal aufsteht, aufgehoben. Die Aufhebung erfolgt vorteilhaft, indem beim Anschieben in der ersten Drehrichtung die in mindestens einer ersten Ebene endende radiale Begrenzung sich mit dem Anschieben um die Längsachse 02 mitdreht. Zugleich kann sich beim Anschieben in der ersten und in der zweiten Drehrichtung die in mindestens einer zweiten Ebene endende radiale Begrenzung mit dem Anschieben um die Längsachse 02 mitdrehen.

Alternativ oder zusätzlich kann die radiale Begrenzung durch mindestens einen Abschnitt einer kurz auch als Innenmantelfläche bezeichneten Innenseite einer Mantelfläche eines hohlzylinderförmigen Rotationskörpers, dessen Rotationssymmetrie- beziehungsweise Zylinderachse mit der Längsachse 02 übereinstimmt, vorgenommen sein.

Zum Anschieben um die Längsachse 02 kann mindestens eine radial nach innen zur Längsachse 02 hin gerichtete und/oder radial von der Längsachse 02 abstehende anschiebende Wand 04 vorgesehen sein, an jeweils eine deren gegenüberliegender Seiten sich das körnige Gut beim Anschieben in je einer der beiden entgegengesetzten Drehrichtungen um die Längsachse 02 anlegt.

Das Verfahren zur Verteilung körnigen Guts auf eine veränderliche Anzahl von Leitungen 02 sieht demnach vor, dass zum Anschieben des körnigen Guts in Drehbewegung um die Längsachse 02 wenigstens eine radial zur Längsachse 02 angeordnete anschiebende Wand 04 vorgesehen ist.

Zur Bildung radialer Begrenzungen können sich an den gegenüberliegenden Seiten der anschiebenden Wand Abschnitte 05 einer Mantelfläche eines zur Längsachse 02 rotationssymmetrischen Rotationskörpers anschließen, beispielsweise eines Hohlzylinders mit kreisförmigem Querschnitt, welche auf den gegenüberliegenden Seiten der anschiebenden Wand 04 in Richtung des in Fig. 1, Fig. 2, Fig. 3, Fig. 4, Fig. 5, Fig. 6, Fig. 9 durch Pfeile T angedeuteten Transports entlang der Längsachse 02 gesehen in verschiedenen Ebenen, auf denen die Längsachse 02 normal aufsteht, enden.

Beispielsweise kann die radiale Beschränkung durch eine Innenseite einer Mantelfläche eines konzentrisch zur Längsachse 02 angeordneten, zumindest abschnittsweise trommelförmigen Rotors 07 vorgenommen sein, auf welcher Mantelfläche nach innen zur Längsachse 02 hin mindestens eine anschiebende Wand absteht, und in welcher Mantelfläche in verschiedenen normal zur Längsachse angeordneten Ebenen auf den gegenüberliegenden Seiten der anschiebenden Wand unmittelbar an diese angrenzend zur Aufhebung der radialen Begrenzung Abgabefenster 06 angeordnet sind.

Alternativ oder zusätzlich kann dies verwirklicht werden, indem wie in Fig. 3 dargestellt an einer in der ersten Drehrichtung vorne liegenden ersten Seite 41 einer anschiebenden Wand 04 eine durch einen in einer der ersten Drehrichtung entsprechenden ersten Anschieberichtung abstehenden Abschnitt 05 einer Mantelfläche eines zur Längsachse 02 rotationssymmetrischen Rotationskörpers gebildete radiale Begrenzung angeordnet ist, welche radiale Begrenzung über die mindestens eine zwischen der Fläche 11 und der Fläche 12 liegende zweite Ebene hinweg aufrechterhalten wird. Beim Anschieben des körnigen Guts in der ersten Anschieberichtung wird das in der durch den Pfeil T angedeuteten Transportrichtung entlang der Längsachse 02 transportierte und durch das Anschieben vor der ersten Seite 41 versammelte körnige Gut durch den Abschnitt 05 daran gehindert, radial weg von der Längsachse 02 auf eine Anzahl von in einem kurz auch als zweite Ebene bezeichneten zweiten Abgabequerschnitt angeschlossene Leitungen 01 abgegeben zu werden. Stattdessen wird das vor der ersten Seite 41 versammelte körnige Gut über den an der ersten Seite 41 abstehenden Abschnitt 05 hinweg weiter bis zu einem kurz auch als erste Ebene bezeichneten ersten Abgabequerschnitt weitertransportiert und auf eine Anzahl von in dem zweiten Abgabequerschnitt angeschlossene Leitungen 01 verteilt abgegeben. An einer in entgegengesetzter, zweiter Drehrichtung vorne liegenden zweiten Seite 42 der anschiebenden Wand 04 besteht keine radiale Begrenzung, so dass beim Anschieben des körnigen Guts in einer der zweiten Drehrichtung entsprechenden zweiten Anschieberichtung das durch das Anschieben vor der zweiten Seite 42 versammelte körnige Gut in dem zwischen der Fläche 12 und der Fläche 13 liegenden zweiten Abgabequerschnitt an die an diesen angeschlossene Anzahl von Leitungen 01 abgegeben wird.

Zusätzlich kann wie in Fig. 5 dargestellt auf der in der zweiten Drehrichtung vorauseilenden zweiten Seite 42 eine durch eine in einem normal zur Längsachse 02 angeordneten Querschnitt liegende Begrenzungswand 08 gebildete axiale Begrenzung in der zweiten Anschieberichtung abstehend angeordnet sein, welche das körnige Gut daran hindert, bis zur ersten Ebene weiter transportiert zu werden, oder wie in Fig. 4 dargestellt beziehungsweise und wie in Fig. 6 dargestellt ebenfalls eine durch einen Abschnitt 05 einer Mantelfläche eines zur Längsachse 02 rotationssymmetrischen Rotationskörpers gebildete radiale Begrenzung in der zweiten Anschieberichtung abstehend angeordnet sein, welche denjenigen weiter entlang der Längsachse transportierten Teil körnigen Guts, welcher nicht in der zweiten Drehrichtung in der mindestens einen zweiten Ebene abgegeben worden ist, daran hindert, in der mindestens einen ersten Ebene abgegeben zu werden.

Die durch den Ausdruck und/oder erhaltene Kombination stellt beispielsweise bei einem Stau vor der in der zweiten Drehrichtung wirksamen axialen Begrenzung sicher, dass selbst ein die axiale Begrenzung überwindender Teil des körnigen Guts nicht in der ersten Ebene abgegeben wird.

Wichtig ist hervorzuheben, dass die Verteilung durch Aufhebung des Transports entlang der Längsachse 02 unterbrochen werden kann.

Hiermit kann Körner umfassendes körniges Gut auf drei verschiedene Anzahlen von Leitungen 01 verteilt werden, ohne den Bedarf zusätzlicher beweglicher Teile. Eine der verschiedenen Anzahlen ist hierbei Null, wobei hierzu der Transport entlang der Längsachse 02 aufgehoben wird.

Eine vorteilhafte Weiterbildung des Verfahrens kann in einem wie in Fig. 12 durch gestrichelte Pfeile G und H dargestellt zwischen dem ersten Verfahrensschritt I und dem zweiten Verfahrensschritt II liegenden siebten Verfahrensschritt VII vorsehen, dass das körnige Gut zur kurzzeitigen Unterbrechung der Haftreibung während des Transports entlang der Längsachse 02 wenigstens einmal radial weg von der Längsachse 02 fällt.

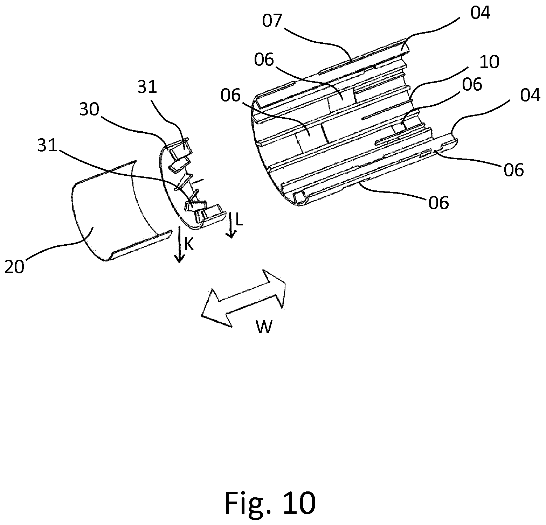

Dies kann in dem Moment geschehen, in dem das körnige Gut aus einer beispielsweise konzentrisch zur Längsachse angeordneten, innerhalb des Rotors 07 mündenden Zufuhrleitung 20 an einen es in Drehbewegung um die Längsachse 02 versetzenden Rotor 07 übergeben wird (Fig. 10, ohne Steuerring 30), oder wenn sich das körnige Gut bereits im Rotor 07 und damit bereits in Drehbewegung um die Längsachse 02 befindet (Fig. 2, Fig. 8). Vorteilhaft kann dies in letzterem Fall durch eine Fallstufe 09 innerhalb des Rotors 07 verwirklicht werden, wie in Fig. 2 durch Pfeile F angedeutet.

Wenigstens der Transport entlang der Längsachse 02 kann vorteilhaft durch einen Luftstrom besorgt werden, der als Trägermedium eines durch Beimengung des Körner umfassenden körnigen Guts zu dem Luftstrom erzeugten Mischstroms dient.

Vorteilhaft kann ein Verfahren zur Verteilung körnigen Guts auf eine veränderliche Anzahl von Leitungen 02 hierzu in einem dem ersten Verfahrensschritt I wie in Fig. 12 durch einen gestrichelten Pfeil J dargestellt vorangehenden achten Verfahrensschritt VIII vorsehen, zunächst einen Mischstrom durch Beimengung Körner umfassenden körnigen Guts zu einem als Trägermedium dienenden Luftstrom zu erzeugen.

Ein voranstehend beschriebenes Verfahren zur Verteilung körnigen Guts auf eine veränderliche Anzahl von Leitungen 02 kann beispielsweise verwirklicht sein, indem:
- das körnige Gut in einem beispielsweise eine normal zur Zylinderachse angeordnete Eintrittsebene aufspannenden Eintrittsquerschnitt in einen hohlzylinderförmigen Verteilerraum mit einer zumindest entlang eines Teils seiner Hohlzylinderachse einen rotationssymmetrischen Querschnitt aufweisenden rotationssymmetrischen Partie transportiert beziehungsweise eingebracht wird und damit eintritt,
- das körnige Gut zumindest bis zum Erreichen der rotationssymmetrischen Partie in Richtung entlang wenigstens eines Teils der Zylinderachse bewegt wird,
- das körnige Gut innerhalb der rotationssymmetrischen Partie von mindestens einer um die Zylinderachse rotierenden anschiebenden Wand zusätzlich zu seiner Bewegung entlang der Zylinderachse in eine Rotationsbewegung um die damit eine Drehachse bildende Zylinderachse versetzt wird,
- sich dabei das körnige Gut an eine Seite der anschiebenden Wand anlegt, und
- das körnige Gut sich entlang der anschiebenden Wand bis zu einem von mindestens zwei in entlang der Zylinderachse versetzt zueinander liegenden Ebenen angeordneten Abgabequerschnitten weiterbewegt, in welchem sich auf der dem körnigen Gut zugewandten Seite der anschiebenden Wand ein radial weg von der Zylinderachse führendes und gemeinsam mit der anschiebenden Wand um die Zylinderachse rotierendes Abgabefenster 06 befindet, durch welche hindurch das körnige Gut unter Abgabe in die im jeweiligen Abgabequerschnitt angeschlossene Anzahl von Leitungen den Verteilerraum wieder verlässt,
wobei die Abgabefenster 06 auf gegenüberliegenden Seiten der anschiebenden Wand in verschiedenen oder zumindest in ihrer Zahl nicht übereinstimmenden Abgabequerschnitten angeordnet sind, so dass das körnige Gut durch Drehrichtungsumkehr in verschiedenen Abgabequerschnitten den Verteilerraum wieder verlässt einhergehend mit einer Verteilung auf unterschiedliche Anzahlen der in den jeweiligen Abgabequerschnitten angeschlossenen Leitungen. Dies schließt die Beschreibung des Verfahrens, das nicht Teil der beanspruchten Erfindung ist, ab.

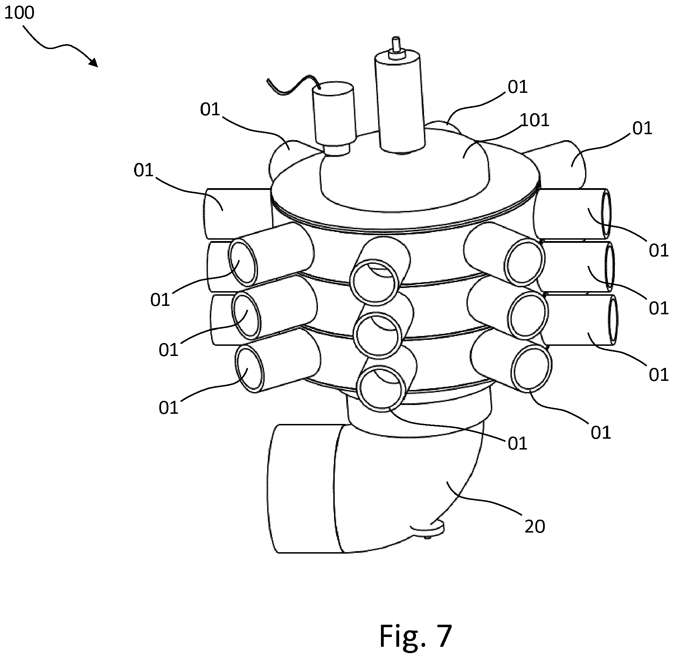

Ein zuvor beschriebenes Verfahren kann durch eine in Fig. 1, Fig. 2, Fig. 3, Fig. 4, Fig. 5, Fig. 6, Fig. 7, Fig. 8, Fig. 9, Fig. 10 und Fig. 11 ganz oder teilweise dargestellte und zur Durchführung eines zuvor beschriebenen Verfahrens geeignete Vorrichtung 100 zur Verteilung körnigen Guts auf eine veränderliche Anzahl von Leitungen 02 verwirklicht werden.

Die Vorrichtung 100 umfasst ein sich entlang einer Längsachse 02 erstreckendes Gehäuse 10), das in seinem Gehäuseinnenraum zumindest eine rotationssymmetrische Partie 107 beherbergt. Der Gehäuseinnenraum hat eine Einlassöffnung 110 sowie eine in einem ersten Abstand entlang der Längsachse 02 von der Einlassöffnung beabstandet innerhalb der rotationssymmetrischen Partie angeordnete erste Auslassöffnung 117, an welche eine erste Anzahl von Leitungen 01 angeschlossen ist. Zwischen der Einlassöffnung 110 und der ersten Auslassöffnung 117 ist eine zweite Auslassöffnung 118 angeordnet, an welche eine mit der ersten Anzahl übereinstimmende oder hiervon verschiedene zweite Anzahl von Leitungen 01 angeschlossen ist. Die zweite Auslassöffnung 118 befindet sich innerhalb der sich mit ihrer Symmetrieachse entlang der Längsachse 02 erstreckenden und von einem Rotor 07 zumindest teilweise eingenommenen rotationssymmetrischen Partie 107. Der Rotor 07 umfasst mindestens eine radial nach innen zur Längsachse 02 hin gerichtete und/oder radial von der Längsachse 02 abstehende anschiebenden Wand 04.

An einer Seite 41, 42 der anschiebenden Wand 04 ist in Umfangsrichtung abstehend zumindest ein Abschnitt 05, 51, 52 einer die rotationssymmetrische Partie 107 des Gehäuseinnenraums zumindest im Bereich einer Auslassöffnung 117, 118, beispielsweise der zweiten Auslassöffnung 118, nachbildenden Mantelfläche angeordnet, auf welchem Abschnitt 05, 51, 52 beim Anschieben des körnigen Guts in einer Drehrichtung des Rotors 07, beispielsweise in dessen erster Drehrichtung, dieses über die eine Auslassöffnung 117, 118 hinweg transportiert wird. Hierdurch kann das körnige Gut die mindestens eine verbleibende Auslassöffnung 118, 117, beispielsweise die wenigstens eine erste Auslassöffnung 117 erreichen, durch welche es dann an die erste Anzahl hieran angeschlossener Leitungen 01 abgegeben wird.

Im Bereich der selben Auslassöffnung 117, 118, im obigen Beispiel die zweite Auslassöffnung 118, sind die gegenüberliegenden Seite 42 der anschiebenden Wand 04, und im Bereich einer verbleibenden anderen Auslassöffnung, im obigen Beispiel die erste Auslassöffnung 117 die selbe Seite 41 der anschiebenden Wand 04 frei von entsprechenden Abschnitten 05, 51, 52 einer die rotationssymmetrische Partie 107 des Gehäuseinnenraums zumindest im Bereich der Auslassöffnungen 117, 118 nachbildenden Mantelfläche.

Beispielsweise kann an einer ersten Seite 41 der anschiebenden Wand 04 zumindest ein in Umfangsrichtung abstehend angeordneter Abschnitt 05, 51 einer die rotationssymmetrische Partie 107 des Gehäuseinnenraums zumindest im Bereich der zweiten Auslassöffnung 118 nachbildenden Mantelfläche vorgesehen sein, auf welchem Abschnitt 05, 51 beim Anschieben des körnigen Guts in einer ersten Drehrichtung des Rotors 07 dieses über die mindestens eine zweite Auslassöffnung 118 hinweg transportiert wird und die mindestens eine erste Auslassöffnung 117 erreicht, durch welche es dann an eine Anzahl hieran angeschlossener Leitungen 01 abgegeben wird.

Die Vorrichtung 100 zur Verteilung körnigen Guts auf mehrere, beispielsweise durch Schläuche gebildete Leitungen 02 umfasst demnach ein Gehäuse 101, welches einen Gehäuseinnenraum umschließt, einen in dem Gehäuseinnenraum drehbar angeordneten Rotor 07 mit mindestens einer anschiebenden Wand 04, und zumindest einen an einer ersten Seite 41 der anschiebenden Wand 04 in Umfangsrichtung abstehend angeordneten, beispielsweise einen Flügel bildenden oder umfassenden, oder von einem solchen umfassten Abschnitt 05, 51 einer die rotationssymmetrische Partie 107 des Gehäuseinnenraums zumindest im Bereich der zweiten Auslassöffnung 118 nachbildenden Mantelfläche.

Der Gehäuseinnenraum weist zumindest eine von einer Gehäusewandung umgebene rotationssymmetrische Partie 107 auf. Die rotationssymmetrische Partie 107 erstreckt sich mit ihrer Symmetrieachse entlang der Längsachse 02.

Das Gehäuse 101 umfasst mindestens eine in den Gehäuseinnenraum führende Einlassöffnung 110, durch welches körniges Gut in den Gehäuseinnenraum einzutreten vermag.

Das Gehäuse 101 umfasst außerdem mindestens eine in wenigstens einem ersten Abstand entlang der Längsachse gesehen von der Einlassöffnung 110 beabstandet angeordnete, aus dem Gehäuseinnenraum führende erste Auslassöffnung 117, an welche eine erste Anzahl von Leitungen 01 angeschlossen ist.

Das Gehäuse 101 umfasst darüber hinaus mindestens eine in wenigstens einem von dem ersten Abstand verschiedenen zweiten Abstand entlang der Längsachse gesehen von der Einlassöffnung 110 beabstandet zwischen dieser und der mindestens einen ersten Auslassöffnung 117 angeordnete, ebenfalls aus dem Gehäuseinnenraum führende zweite Auslassöffnung 118, an welche eine zweite Anzahl von Leitungen 01 angeschlossen ist. Die mindestens eine zweite Auslassöffnung 118 befindet sich innerhalb der rotationssymmetrischen Partie 107. Die zweite Anzahl von Leitungen 01 kann gleich der ersten Anzahl oder von der ersten Anzahl verschieden sein.

Auch die mindestens eine erste Auslassöffnung 117 kann sich innerhalb der rotationssymmetrischen Partie 107 befinden.

Das körnige Gut vermag aus dem Gehäuseinnenraum durch erste und zweite Auslassöffnungen 117, 118 auszutreten.

Wichtig ist in diesem Zusammenhang hervorzuheben, dass in der voranstehend verwendeten Nomenklatur die in Verbindung mit Fig. 1 und Fig. 8 bereits erwähnten Sammelkanäle 17, 18 erste und zweite Auslassöffnungen 117, 118 bilden, an welche jeweils eine Anzahl von Leitungen 01 angeschlossen sind. Insbesondere bei dem eine erste Auslassöffnung 117 bildenden Sammelkanal 17 und dem mindestens einen wenigstens eine zweite Auslassöffnung 118 bildenden Sammelkanal 18 sind dabei verschiedene Anzahlen von Leitungen 01 angeschlossen, auf deren verschiedene Anzahlen das körnige Gut drehrichtungsabhängig verteilt wird.

In derselben Nomenklatur bilden innerhalb einer der verschiedenen Ebenen direkt an die rotationssymmetrische Partie 107 angrenzende Mündungen von mehreren Leitungen 01 mehrere Auslassöffnungen 117 beziehungsweise 118.

Der in dem Gehäuseinnenraum angeordnete Rotor 07 erstreckt sich unter zumindest teilweiser Einnahme der rotationssymmetrischen Partie 107 entlang der Längsachse 02 und ist um diese drehbar angeordnet.

Die mindestens eine anschiebende Wand 04 des Rotors 07 reicht innerhalb der rotationssymmetrischen Partie 107 bis zur Gehäusewandung. Die mindestens eine anschiebende Wand 04 des Rotors 07 ist radial nach innen zur Längsachse 02 hin gerichtet und/oder steht radial von der Längsachse 02 ab.

Die mindestens eine anschiebende Wand 04 schiebt in den entgegengesetzten Drehrichtungen des Rotors 07 mit je einer ihrer beiden gegenüberliegenden Seiten 41, 42 das körnige Gut in eine Drehbewegung um die Längsachse 02 an. Mit anderen Worten schiebt die mindestens eine anschiebende Wand 04 mit je einer ihrer beiden gegenüberliegenden Seiten 41, 42 das körnige Gut in jeweils einer der beiden entgegengesetzten Drehrichtungen bei Drehung des Rotors 07 in eine Drehbewegung um die Längsachse 02 an.

Der zumindest an einer ersten Seite 41 der mindestens einen anschiebenden Wand 04 in Umfangsrichtung abstehend angeordnete Flügel umfasst einen Abschnitt 05, 51 einer die rotationssymmetrische Partie 107 des Gehäuseinnenraums zumindest im Bereich der zweiten Auslassöffnung 118 nachbildenden Mantelfläche
Beim Anschieben des körnigen Guts mittels der ersten Seite 41 der anschiebenden Wand 04 in einer ersten Drehrichtung des Rotors 07 um die Längsachse 02 gelangt dieses bei seiner Bewegung entlang der Längsachse über den Abschnitt 05, 51 hinweg über die mindestens eine zweite Auslassöffnung 118.

Das körnige Gut wird so über den Abschnitt 05, 51 über die mindestens eine zweite Auslassöffnung 118 hinweg entlang der Längsachse 02 transportiert.

Hierdurch gelangt das körnige Gut über die mindestens eine zweite Auslassöffnung 118 hinweg, wodurch es die mindestens eine erste Auslassöffnung 117 erreicht, durch welche es dann an die erste Anzahl an die mindestens eine erste Auslassöffnung 117 angeschlossener Leitungen 01 abgegeben wird.

Der Flügel mit dem Abschnitt 05, 51 einer die rotationssymmetrische Partie des Gehäuseinnenraums zumindest im Bereich der zweiten Auslassöffnung 118 nachbildenden Mantelfläche bildet eine radiale Begrenzung für das körnige Gut, so dass dieses bei Drehrichtung in Richtung diesen Abschnitts 05, 51 auf derjenigen Seite 41 der anschiebenden Wand, auf welcher der Abschnitt 05, 51 einer die rotationssymmetrische Partie 107 des Gehäuseinnenraums zumindest im Bereich der zweiten Auslassöffnung 118 nachbildenden Mantelfläche angeordnet ist, nicht in eine zweite Auslassöffnung 118 in einer in Transportrichtung des körnigen Guts entlang der Längsachse 02 gesehen vor einer in einer ersten Ebene liegenden ersten Auslassöffnung 117 liegenden zweiten Ebene abgegeben werden kann.

Darüber hinaus kann an der mindestens einen anschiebenden Wand 04 des Rotors 07 zumindest ein Flügel an einer der ersten Seite 41 gegenüberliegenden zweiten Seite 42 der anschiebenden Wand 04 in Umfangsrichtung unter Freihaltung des Bereichs der zweiten Auslassöffnung 118 abstehend angeordnet sein, der einen Abschnitt 05, 52 einer die rotationssymmetrische Partie 107 des Gehäuseinnenraums zumindest im Bereich der ersten Auslassöffnung 117 nachbildende Mantelfläche umfasst.

Der Abschnitt 05, 52 hindert das körnige Gut beim Anschieben mittels der zweiten Seite 42 der anschiebenden Wand 04 in einer der ersten Drehrichtung des Rotors 07 um die Längsachse 02 entgegengesetzten zweiten Drehrichtung daran, bei einem zumindest teilweisen Weitertransport entlang der Längsachse 02 den Gehäuseinnenraum durch die mindestens eine erste Auslassöffnung 118 zu verlassen.

Der Flügel mit dem Abschnitt 05, 52 einer die rotationssymmetrische Partie 107 des Gehäuseinnenraums zumindest im Bereich der ersten Auslassöffnung nachbildenden Mantelfläche bildet eine radiale Begrenzung für das körnige Gut, so dass dieses bei Drehrichtung in derjenigen Richtung, in welcher die entsprechende Seite 42 der anschiebenden Wand 04 vorauseilt, von welcher der Abschnitt 05, 52 einer die rotationssymmetrische Partie 107 des Gehäuseinnenraums zumindest im Bereich der ersten Auslassöffnung 117 nachbildenden Mantelfläche absteht, nicht in eine erste Auslassöffnung 117 in einer in Transportrichtung des körnigen Guts entlang der Längsachse 02 gesehen auf eine zweite Ebene darauffolgenden ersten Ebene abgegeben werden kann.

Der oder die Abschnitte 05, 51 der die rotationssymmetrische Partie 107 des Gehäuseinnenraums zumindest im Bereich der mindestens einen zweiten Auslassöffnung 118 nachbildenden Mantelfläche können sich zur fast vollständigen, die rotationssymmetrische Partie 107 des Gehäuseinnenraums zumindest im Bereich der zweiten Auslassöffnung 118 nachbildenden Mantelfläche ergänzen.

Ebenso können sich der oder die Abschnitte 05, 52 der die rotationssymmetrische Partie 107 des Gehäuseinnenraums zumindest im Bereich der mindestens einen ersten Auslassöffnung 117 nachbildenden Mantelfläche zur fast vollständigen, die rotationssymmetrische Partie 107 des Gehäuseinnenraums zumindest im Bereich der ersten Auslassöffnung 117 nachbildenden Mantelfläche ergänzen.

In diesen Fällen wachsen die Flügel zu einer durch Abgabefenster 06 unterbrochenen Ringfläche zusammen, wobei zwischen den in verschiedenen normal zur Längsachse 02 liegenden Ebenen angeordneten Abgabefenstern 06 eine parallel zur Längsachse 02 verlaufende anschiebende Wand 04 angeordnet ist, die mit je einer ihren beiden gegenüberliegenden Seiten 41, 42 jeweils unmittelbar an je eines der beiden Abgabefenster 06 angrenzt.

Die Einschränkung, wonach der oder die Abschnitte 05, 51, 52 sich lediglich fast vollständig zur Mantelfläche ergänzen, ergibt sich aus dem Umstand, dass in einem solchen Falle zumindest Abgabefenster 06 in verschiedenen normal zur Längsachse liegenden Ebenen zur Abgabe körnigen Guts in den entgegengesetzten Drehrichtungen in der Mantelfläche vorgesehen sind.

Vorzugsweise ist unmittelbar angrenzend an die anschiebende Wand 04 auf der ersten Seite 41 der anschiebenden Wand 04 der Bereich entlang der Längsachse 02, in dem sich eine erste Auslassöffnung 117 befindet, und auf der zweiten Seite 42 der anschiebenden Wand 04 der Bereich entlang der Längsachse 02, in dem sich eine zweite Auslassöffnung 118 befindet, frei von Abschnitten einer die rotationssymmetrische Partie 107 des Gehäuseinnenraums zumindest im Bereich der Auslassöffnungen 117, 118 nachbildenden Mantelfläche.

An einer der ersten Seite 41 gegenüberliegenden zweiten Seite 42 der anschiebenden Wand 04 kann unter Freihaltung des Bereichs der zweiten Auslassöffnung 118 wenigstens eine in Umfangsrichtung abstehende Begrenzungswand 08 angeordnet sein, beispielsweise ebenfalls zumindest als Teil eines Flügels.

Die Begrenzungswand 08 liegt in einem normal zur Längsachse 02 angeordneten Querschnitt. Die Begrenzungswand 08 hindert das körnige Gut beim Anschieben in einer der ersten Drehrichtung des Rotors 07 um die Längsachse 02 entgegengesetzten zweiten Drehrichtung mittels der zweiten Seite 42 der anschiebenden Wand 04 an einem zumindest teilweisen Weitertransport entlang der Längsachse 02 hin zu einer ersten Auslassöffnung 117, nachdem es die zweite Auslassöffnung 118 erreicht hat. Demzufolge hindert die Begrenzungswand 08 das körnige Gut damit daran, den Gehäuseinnenraum durch die mindestens eine erste Auslassöffnung 117 zu verlassen.

Die Begrenzungswand 08 kann ebenfalls Teil eines Flügels sein. Der Flügel mit der in einem normal zur Längsachse angeordneten Querschnitt liegenden Begrenzungswand 08 bildet eine axiale Begrenzung für das körnige Gut, so dass dieses bei Drehrichtung in Richtung der abstehenden Begrenzungswand 08 auf derjenigen Seite 42 der anschiebenden Wand 04, auf welcher die Begrenzungswand 08 absteht, nicht in eine darauffolgende Ebene weitertransportiert werden kann.

Fig. 3, Fig. 4, Fig. 5, Fig. 6 zeigen hierzu verschiedene bereits voranstehend in Verbindung mit dem Verfahren erläuterte Ausführungsbeispiele einer anschiebenden Wand 04 mit daran angeschlossenen, radiale sowie radiale und/oder axiale Begrenzungen für die verschiedenen ersten und zweiten Ebenen bildenden Flügeln.

Die Vorrichtung 100 kann - wie bereits in Verbindung mit dem Verfahren erwähnt - eine in radialer Richtung wirksame Fallstufe 09 umfassen. Diese kann wie in den in Fig. 2 und Fig. 8 dargestellten Ausführungsbeispielen unmittelbar im Rotor 07 angeordnet sein.

Bei der in Fig. 8 gezeigten Ausgestaltung sind insgesamt vierundzwanzig Leitungen 01 in drei Ebenen angeschlossen, einer ersten Ebene mit einer durch einen Sammelkanal 17 gebildeten ersten Auslassöffnung 117, an die acht Leitungen 01 angeschlossen sind, und zwei zweiten Ebenen mit zwei durch je einen Sammelkanal 18 gebildeten zweiten Auslassöffnungen 118, an die ebenfalls jeweils acht Leitungen 01 angeschlossen sind.

Jede Leitung führt beispielsweise zu einer Reihe einer Sämaschine. Die insgesamt vierundzwanzig Reihen werden über die drei Ebenen mit körnigem Gut versorgt, entsprechend acht Reihen je Ebene. Im oberen Bereich ist zentral ein Antriebsmotor zu sehen und links daneben eine Sensoreinheit. In der dargestellten Ausgestaltung dient die die erste Auslassöffnung 117 umfassende erste Ebene einer Fahrgassenschaltung. Fig. 9 zeigt eine Abwicklung des Rotors 07 der in Fig. 8 dargestellten Ausgestaltung. Wird eine Drehrichtung gewählt, die einer Bewegung des Rotors 07 nach rechts in Fig. 9 entspricht, schieben jeweils die rechten Seiten der anschiebenden Wände 04 das körnige Gut an. Dieses sammelt sich in dieser Drehrichtung während seines Transports entlang der Längsachse 02 in Fig. 9 von unten nach oben in den durch anschiebende Wände 04 voneinander getrennten Kanälen links vor den rechten Seiten der anschiebenden Wände 04. Hierdurch findet eine Abgabe des körnigen Guts nur in den zwischen den Flächen 13, 14, und 15, 16 liegenden zweiten Ebenen statt, entsprechend einer Verteilung auf die Anzahl der in den beiden zweiten Ebenen angeschlossenen Leitungen 01.

Wird die Drehrichtung geändert, sammelt sich das körnige Gut während seines Transports entlang der Längsachse 02 in Fig. 9 von unten nach oben in den durch anschiebende Wände 04 voneinander getrennten Kanälen rechts vor den linken Seiten der anschiebenden Wände 04. Hierdurch gelangt ein gleicher Anteil körnigen Guts in die beiden zweiten Ebenen und auch in die erste Ebene. Hierdurch findet eine Abgabe des körnigen Guts in den zwischen den Flächen 13, 14, und 15, 16 liegenden zweiten Ebenen und in der zwischen den Flächen 11, 12 liegenden ersten Ebene zu gleichen Teilen statt, entsprechend einer Verteilung auf die Anzahl der in den allen Ebenen, der ersten Ebene und der beiden zweiten Ebenen angeschlossenen Leitungen 01.

Durch eine in der in Fig. 9 dargestellten Abwicklung des Rotors 07 ersichtliche geschickte Anordnung der verschiedenen Ebenen zugeordneten Abgabefenster 06 über den Umfang des Rotors 07 hinweg, wird in beiden Drehrichtungen eine Gleichverteilung der Menge des körnigen Guts auf die in den jeweils bedienten Ebenen angeschlossenen Leitungen 01 erhalten.

Damit liegt sowohl vor dem Abschalten einer Ebene und damit einer Anzahl in einer Ebene angeschlossener Leitungen 01, als auch nach dem Abschalten einer Ebene und damit einer Anzahl in einer Ebene angeschlossener Leitungen 01 eine sehr gleichmäßige Verteilung des körnigen Guts auf die momentan bediente Anzahl von Leitungen 01 vor.

Da die das Saatgut der abgeschalteten Leitungen nun gleichmäßig auf die Leitungen die noch in Betrieb sind verteilt wird.

Wichtig ist in diesem Zusammenhang hervorzuheben, dass nicht zwingend eine Leitung nur an eine Ebene angeschlossen sein darf. Beim Ausführungsbeispiel in Fig. 1 sind insgesamt vier Leitungen 01 vorgesehen, von denen drei in der die durch einen Sammelkanal 17 gebildete erste Auslassöffnung 117 umfassenden Ebene und alle vier in der die durch einen Sammelkanal 18 gebildete zweite Auslassöffnung 118 umfassenden Ebene bedient werden.

Ebenfalls wichtig ist hervorzuheben, dass innerhalb eines Rotors 07 durch mehrere verschiedene Zuordnungen von Abschnitten 05, 51, 52 zu verschiedenen Abgabequerschnitten 117, 118 gebildete Ausgestaltungen einer drehrichtungsabhängigen Abgabe körnigen Guts auf unterschiedliche Anzahlen von Leitungen verwirklicht sein können. Denkbar ist hierbei beispielsweise eine Bedienung aller Abgabequerschnitte in einer Drehrichtung und eine Bedienung nur eines Teils der Abgabequerschnitte in der anderen Drehrichtung (Fig. 8, Fig. 9) ebenso wie eine ausschließliche Bedienung eines oder mehrerer erster Abgabequerschnitte 117 in der einen Drehrichtung und eine ausschließliche Bedienung eines oder mehrerer zweiter Abgabequerschnitte 118 in der anderen Drehrichtung (Fig. 1, Fig. 2).

Eine Fallstufe 09 kann alternativ zu den Ausgestaltungen in Fig. 2 und in Fig. 8 zwischen einer konzentrisch zwischen der Längsachse 02 und dem Rotor 07 in den Rotor 07 mündenden Zufuhrleitung 20 und dem Rotor 07 ausgebildet sein, wie in Fig. 10 gezeigt.

Zur Absperrung zumindest einer Auslassöffnung 117, 118 kann der Rotor 07 in Richtung parallel zur Längsachse 02 beweglich angeordnet sein. Durch eine Axialverschiebung des Rotors 07 kann dieser aus einer Stellung, in der sich in diesem angeordnete Abgabefenster 06 in der selben Ebene befinden, wie eine oder mehrere Auslassöffnungen 117, 118, in eine andere Stellung verbracht werden, in welcher zumindest ein oder mehrere Abgabefenster 06 in ihrer Position entlang der Längsachse 02 nicht mehr mit zumindest einer Ebene einer oder mehrerer Auslassöffnungen 117, 118 übereinstimmen. Hierdurch kann eine an wenigstens eine Auslassöffnung angeschlossene Anzahl von Leitungen vollständig von der Versorgung mit körnigem Gut abgeriegelt werden.

Hierdurch ergibt sich eine zusätzliche Varianz der Verteilung körnigen Guts auf verschiedene Anzahlen angeschlossener Leitungen 01 in den entgegengesetzten Drehrichtungen des Rotors 07 sowie die zusätzlich durch eine Längsverschiebbarkeit des Rotors 07 gegebene Absperrmöglichkeit der an Auslassöffnungen 117, 118 verschiedener Ebenen angeschlossenen Leitungen 01.

Die Vorrichtung 100 kann beispielsweise zur Absperrung zumindest einer Auslassöffnung 117, 118 alternativ oder zusätzlich einen Steuerring 30 umfassen. Der Steuerring 30 und der Rotor 07 sind relativ zueinander in Richtung parallel zur Längsachse 02 axial beweglich angeordnet.

Durch eine Kombination der Bedienung mehrerer erster und/oder zweiter Auslassöffnungen 117, 118 nebst der an diesen angeschlossenen weiterführenden Leitungen 01 in entgegengesetzten Drehrichtungen und einer Absperrung mindestens einer ersten und/oder zweiten Auslassöffnungen 117, 118 durch einen axial beweglich angeordneten Rotor 07 und/oder Steuerring 30 kann mit überschaubarem konstruktivem Aufwand das körnige Gut auf eine noch größere Zahl von verschiedenen Anzahlen von Leitungen 01 verteilt werden.

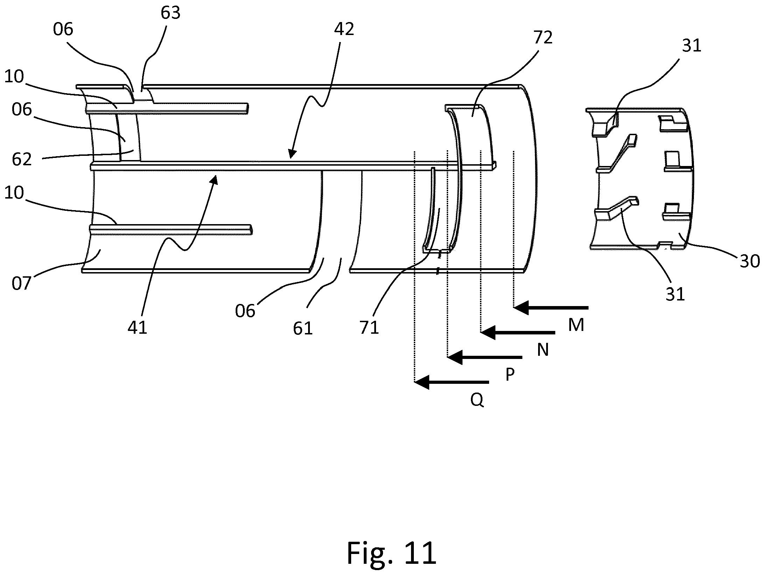

Die in Fig. 10 und Fig. 11 dargestellten Ausführungsbeispiele erlauben darüber hinaus noch eine Ausgestaltung in Verbindung mit einer Fallstufe 09, bei der in Verlängerung einer Zufuhrleitung 20 ein koaxial zur Längsachse innerhalb des Rotors 07 zwischen zwei Stellungen axial entlang der Längsachse 02 verschiebbar und mit dem Rotor 07 mitdrehend angeordneter Steuerring 30 vorgesehen ist. Der Steuerring 30 ist in einer ersten Stellung seiner durch einen Doppelpfeil W in Fig. 10 angedeuteten Axialverschiebbarkeit um einen Spalt von der Zufuhrleitung 20 beabstandet. Durch den in der ersten Stellung herrschenden Spalt fällt das körnige Gut unter gleichmäßiger Verteilung über den Umfang des Rotors 07 direkt aus der Zufuhrleitung 20 in den Rotor 07, wie in Fig. 10 durch einen Pfeil K angedeutet. Der Steuerring 30 grenzt in einer zweiten Stellung seiner durch einen Doppelpfeil W in Fig. 10 angedeuteten Axialverschiebbarkeit zumindest derart unmittelbar an die Zufuhrleitung 20 an, dass das aus der Zufuhrleitung 20 austretende körnige Gut vollständig in den mit dem Rotor 07 mitdrehenden Steuerring 30 übertritt. In der zweiten Stellung gelangt das körnige Gut nur über den mit dem Rotor 07 mitdrehenden Steuerring 30 in den Rotor 07. Dabei fällt es erst am Ende des mitdrehenden Steuerrings 30 aus diesem in den Rotor 07, wie in Fig. 10 durch einen Pfeil L angedeutet, beziehungsweise wird aufgrund der Drehbewegung des Steuerrings 30 radial weg von der Längsachse in den Rotor 07 geschleudert. Leitelemente 31 im Steuerring 30 leiten das körnige Gut derart, dass die Versorgung einzelner, in Umfangsrichtung des Rotors 07 betrachtet beidseitig durch anschiebende Wände 04 begrenzter Kanäle im Rotor 07 ausgespart wird. Indem ein solcher vermittels eines Steuerrings 30 wahlweise überbrück- beziehungsweise abschaltbarer Kanal in einer anderen Ebene endet, als die verbleibenden, ebenfalls beidseitig durch verschiedene anschiebende Wände 04 begrenzten Kanäle des Rotors 07, kann eine Ebene und hiermit die Anzahl an beziehungsweise in dieser angeschlossener Leitungen 01 von der Versorgung mit körnigem Gut wahlweise ausgeschlossen werden. Hierdurch kann eine beispielsweise eine komplette Fahrgasse versorgende Anzahl von Leitungen 01 vollständig von der Zufuhr körnigen Guts getrennt werden.

Bei der Ausgestaltung gemäß Fig. 10 kann der Steuerring 30 relativ zum Rotor 07 entlang der Längsachse 02 axial verschoben werden. Der Steuerring 30 ist dabei zur Veranschaulichung außerhalb des Rotors 07 dargestellt. Der Steuerring 30 kann axial zur beispielsweise durch ein Rohr oder einen Rohrabschnitt gebildeten Zufuhrleitung 20 hin- oder von dieser weggeschoben werden.

Je nachdem ob das körnige Gut vor oder nach dem Steuerring 30 in den Rotor 07 geschleudert wird und/oder herunterfällt werden zwölf oder elf beidseitig durch anschiebende Wände 04 begrenzte und voneinander durch die anschiebenden Wände 04 getrennte Kanäle des Rotors 07 gefüllt.

Beim Zusammenschieben des Steuerrings 30 in Richtung Zufuhrleitung 20 reduziert sich die Abgabe auf elf Kanäle.

Eine Verdrehung des Steuerrings 30 gegenüber dem Rotor 07 ist ebenfalls denkbar. Hierdurch könnten verschiedene, zu unterschiedlichen Ebenen mit verschiedenen Anzahlen von diesen abgehender Leitungen 01 führender Kanäle bedient werden.

Bei der Ausgestaltung gemäß Fig. 11 kann die Verteilung des körnigen Guts auf die Anzahlen der in den verschiedenen Ebenen angeschlossenen Leitungen 01 beispielsweise zur Anpassung an Reihen von Fahrgassen beispielsweise passend zu einer Halbseitenabschaltung geschaltet werden. Hierzu sind im Rotor 07 beidseitig einer anschiebenden Wand 04 Rampen 71, 72 angeordnet. Darüber hinaus sind auf den gegenüberliegenden Seiten 41, 42 der anschiebenden Wänden 04 sowie auf den gegenüberliegenden Seiten von dazwischen angeordneten Trennwänden 10 Abgabefenster 61, 62, 63 in verschiedenen Ebenen angeordnet.

Dabei können die in den verschiedenen von auf jeder Seite 41, 42 einer anschiebenden Wand 04 durch unterschiedliche Abgabefenster 61, 62, 63 erreichbaren Ebenen angeschlossenen Leitungen 01 gemäß einer Fahrgassenfunktion in Abhängigkeit von der durch Pfeile M, N, P, Q dargestellten Axialpositionen des Steuerrings 30 bedient werden. Beispielsweise können drei Reihen pro Rad abgeschaltet werden.

Es ergeben ich somit in Abhängigkeit von der Drehrichtung des Rotors 07 gemeinsam mit dem Steuerring 30 und in Abhängigkeit von der Axialposition des Steuerrings 30 relativ zum Rotor 07 sechs unterschiedliche Schaltzustände:
- gesamte Sämaschine ohne Fahrgasse,
- gesamte Sämaschine mit Fahrgasse,
- erste Halbseite ohne Fahrgasse,
- erste Halbseite mit Fahrgasse,
- zweite Halbseite ohne Fahrgasse, und
- zweite Halbseite mit Fahrgasse.

Diese sechs Schaltzustände ergeben sich aus der Drehrichtung des Steuerrings 30. Durch Drehrichtungsänderung wird das körnige Gut an unterschiedlichen Stellen abgeben. Durch die Eintauchtiefe des Steuerrings 30 in den Rotor 07 kann mit dem Abgabepunkt des körnigen Guts gewählt werden, ob die gesamte Breite oder nur ein Teil der Sämaschine mit Saatgut versorgt wird.

Die Vorrichtung 100 kann Antriebsmittel umfassen, um den Rotor 07 in entgegengesetzte Drehrichtungen um die Längsachse 02 anzutreiben.

Die Antriebsmittel können einen eigenen Motor, beispielsweise Elektromotor umfassen. Alternativ können sie eine von einem Luftstrom angetriebene Turbine umfassen oder Verbindungsmittel zu einer Triebwelle beispielsweise einer landwirtschaftlichen Maschine.

Die Vorrichtung 100 kann Mittel zur Erzeugung eines Mischstroms aus einem als Trägermedium dienenden Luftstrom und diesem beigemengtem körnigen Gut umfassen.

Damit in Verbindung kann sie auch eine die Mittel zur Erzeugung des Mischstroms mit der Einlassöffnung 110 verbindende Zufuhrleitung 20 umfassen.

Der Rotor 07 kann zumindest abschnittsweise als ein nach außen radial weg von der Längsachse 02 offener Sternrotor mit mindestens einer radial von der Längsachse 02 abstehenden anschiebenden Wand 04 ausgeführt sein.

Alternativ oder zusätzlich kann der Rotor 07 zumindest abschnittsweise als ein nach außen radial weg von der Längsachse 02 geschlossener Trommelrotor mit einem rohr- oder rohrabschnittsförmigen Außenring und mit mindestens einer von diesem radial nach innen zur Längsachse 02 hin abstehenden anschiebenden Wand 04 ausgeführt sein. In dem Außenring ist jeweils unmittelbar anschließend an die anschiebende Wand 04 auf einer ersten Seite 41 der anschiebenden Wand 41 ein mindestens einer ersten Auslassöffnung 117 zugeordnetes Abgabefenster 06 und auf einer zweiten Seite 42 der anschiebenden Wand 04 ein mindestens einer zweiten Auslassöffnung 118 zugeordnetes Abgabefenster 06 entsprechend den verschiedenen Abgabequerschnitten entlang der Längsachse 02 angeordnet.

Eine vorteilhafte Ausgestaltung der Vorrichtung 100 sieht vor, dass mindestens eine Trennwand 10 parallel zwischen einander von Angesicht zu Angesicht gegenüberstehenden Seiten 41, 42 mindestens einer anschiebenden Wand 04 angeordnet ist.

Ist demnach nur eine anschiebende Wand 04 vorgesehen, so befindet sich die Trennwand 10 auf einer von der anschiebenden Wand 04 verschiedenen, vorzugsweise gegenüberliegenden Umfangsposition des Rotors 07.

Bei mehreren anschiebenden Wänden 04 und mehreren zwischen diesen angeordneten Trennwänden 10 verteilen sich die anschiebenden Wände 10 und die Trennwände bevorzugt gleichmäßig über den Umfang des Rotors 07.

Die Trennwand zeichnet sich dadurch aus, dass sie bevorzugt wie in Fig. 1, Fig. 9, Fig. 10, Fig. 11 beispielhaft dargestellt in Transportrichtung des körnigen Guts entlang der Längsachse 02 gesehen erst nach der oder den anschiebenden Wänden 04 beginnen.

Alternativ oder zusätzlich können die Trennwände 10, insbesondere in Verbindung mit einer radialen Fallstufe 09, wie in Fig. 2 und Fig. 8 dargestellt weniger weit nach innen zur Längsachse 02 hin ragen, als die anschiebenden Wände 04.

Die mindestens eine Trennwand 10 verbessert die Verteilung körnigen Guts auf die an den in den entgegengesetzten Drehrichtungen bedienten verschiedenen Auslassöffnungen 117, 118 angeschlossenen Leitungen 01, indem sie bei einer Anhäufung körnigen Guts dieses daran hindern, sich über eine radiale und/oder axiale Begrenzung hinweg aufzutürmen und hierdurch den Gehäuseinnenraum durch eine andere Auslassöffnung 117, 118 zu verlassen, als dies in einer momentanen Drehrichtung vorgesehen ist.

Es ist ersichtlich, dass die Erfindung verwirklicht sein kann, indem die auf unterschiedliche Anzahlen von Leitungen 01 beziehungsweise auf eine veränderbare Anzahl von Leitungen 01 zu verteilenden Körner beispielsweise in einem kontinuierlichen Körnerstrom einem vorzugsweise zumindest abschnittsweise trommelförmigen Rotor 07 zugeführt werden, welcher um eine sich entlang einer Längsachse 02 erstreckenden Drehachse drehbar angeordnet ist.

Die Körner werden im Rotor 07 entlang dessen die Drehachse bildenden Längsachse 02 bewegt.

Der Rotor 07 umfasst mindestens eine radial nach innen zur Drehachse hin gerichtete anschiebende Wand 04. Sind mehr als eine anschiebende Wand 04 vorgesehen, so sind die anschiebenden Wände 04 über den Innenumfang des Rotors 07 vorzugsweise gleichmäßig verteilt angeordnet.

Durch Drehung des Rotors 07 um die Drehachse versetzt die mindestens eine anschiebende Wand 04 die zu verteilenden Körner zusätzlich zu ihrer Bewegung entlang der Drehachse in Rotation um die Drehachse.

In dem Rotor 07 werden hierbei die Körner von den anschiebenden Wänden 04 im Kreis bewegt. Je nach Drehrichtung legen sich die Körner dabei an unterschiedliche Seiten 41, 42 der einen oder mehreren anschiebenden Wände 04 an.

An den gegenüberliegenden Seiten 41, 42 jeder der anschiebenden Wände 04 sind in dem Rotor 07 beziehungsweise in der Mantelfläche des Rotors 07 mindestens zwei Abgabefenster 06 in wenigstens zwei verschiedenen, jeweils normal zur Drehachse liegenden Ebenen angeordnet.

Diese heben eine durch die Innenseite der Mantelfläche des Rotors 07 gebildete Begrenzung für die Körner radial weg von der Drehachse auf, so dass diese bei Erreichen eines Abgabefensters 06 mit einer Bewegungskomponente radial weg von der Drehachse den Rotor 07 verlassen können.

Bevorzugt grenzen die Abgabefenster 06 auf den gegenüberliegenden Seiten 41, 42 einer anschiebenden Wand 04 unmittelbar an die Wand 04 an.

Je Ebene können eine oder mehrere Abgabefenster 06 vorgesehen sein.

Jede der mindestens zwei Ebenen, in denen die Abgabefenster 06 auf der jeweils einen Seite 41 der anschiebenden Wände 04 und auf der jeweils anderen Seite 42 der anschiebenden Wände 04 entlang der Drehachse gesehen versetzt zueinander angeordnet sind, bildet einen Abgabequerschnitt für die Körner.

In welchem der Abgabequerschnitte die Körner abgegeben werden, wird durch die in der momentanen Drehrichtung des Rotors 07 gesehen vordere Seite 41, 42 der anschiebenden Wand 04 festgelegt.

Welche der beiden Seiten 41, 42 der anschiebenden Wand 04 die Körner anschiebt, wird durch die Drehrichtung des Rotors 07 bestimmt.

Schiebt die anschiebende Wand 04 mit ihrer einen Seite 41 die Körner an, so erfolgt die Abgabe in dem einen Abgabequerschnitt, schiebt die anschiebende Wand 04 die Körner mit ihrer anderen Seite 42 an, so erfolgt die Abgabe in dem anderen Abgabequerschnitt.

Hierzu befinden sich an den gegenüberliegenden Seiten durch Abschnitte der Mantelfläche gebildete radiale Begrenzungen für die radial weg von der Drehachse gedrängten Körner in unterschiedlichen Abgabequerschnitten. Die auf den gegenüberliegenden Seiten einer anschiebenden Wand 04 in verschiedenen Abgabequerschnitten angeordneten Abgabefenster 06 stellen lokale Aufhebungen der radialen Begrenzung dar. Erreichen die von einer Seite 41, 42 der anschiebenden Wand 04 her angeschobenen und hierdurch vor der entsprechenden Seite 41, 42 der anschiebenden Wand 04 versammelten Körner eine auf der entsprechenden Seite 41, 42 in Umfangsrichtung gesehen vorzugsweise unmittelbar angrenzende, vor der entsprechenden Seite 41, 42 der anschiebenden Wand 04 angeordnete Abgabefenster 06, welche eine ansonsten vorherrschende radiale Begrenzung aufhebt, werden sie durch die Drehbewegung radial weg von der Drehachse in das sich in dem entsprechenden Abgabequerschnitt befindende mindestens eine Abgabefenster 06 gedrängt. Ist im eine vom jeweiligen Abgabefenster 06 während des Umlaufs gemeinsam mit der anschiebenden Wand 04 um die Drehachse überstrichende Fläche umfassenden Abgabequerschnitt ein ringförmiger Sammelkanal 17, 18 um den Rotor 07 herum angeordnet (Fig. 1, Fig. 8), an den eine Anzahl von Leitungen 01 angeschlossen ist, so verlassen die während ihres Transports in Richtung entlang der Drehachse eine vor der in der jeweiligen Drehrichtung die Körner in Drehbewegung um die Drehachse anschiebenden Seite 41, 42 angeordnete Abgabefenster 06 erreichenden Körner direkt den Rotor 07. Im Sammelkanal 17, 18 werden sie in die an diesen angeschlossenen Leitungen 01 verteilt.

Ist anstelle eines ringförmigen Sammelkanals 17, 18 vorgesehen, dass die Mündungen der in einem Abgabequerschnitt angeschlossenen Leitungen 01 unmittelbar in der von dem jeweiligen Abgabefenster 06 während dessen Umlaufs gemeinsam mit der anschiebenden Wand 04 um die Drehachse überstrichenden Fläche liegen, so rutschen die Körner zunächst in das Abgabefenster 06 bis dieses während seines Umlaufs eine eine Auslassöffnung 117, 118 im entsprechenden Abgabequerschnitt bildende Mündung einer in diesem Abgabequerschnitt angeschlossenen Leitung 01 überstreicht.

Wichtig ist hervorzuheben, dass zumindest ein in Transportrichtung der Körner entlang der Drehachse gesehen letzter Abgabequerschnitt nicht durch die von einem radial angeordneten Abgabefenster 06 überstrichene Fläche gebildet sein muss, sondern alternativ oder zusätzlich eine normal zur Drehachse liegende Fläche umfassen kann, durch welche die Körner bei ihrem Weitertransport entlang der Drehachse den Rotor 07 verlassen.

Grundsätzlich können radiale Begrenzungen und deren Aufhebungen gleichermaßen eingesetzt werden, um die gewünschte drehrichtungsabhängige Verteilung auf verschiedene Anzahlen von in vereinfacht als Ebenen bezeichneten Abgabequerschnitten angeschlossenen Leitungen 01 zu erhalten. Durch eine Abgabe der Körner in die verschiedene Abgabequerschnitte bildende beispielsweise erste oder zweite Ebene kann festgelegt werden, welche von den in der oder den entsprechenden Ebenen angeschlossenen Anzahlen von Leitungen 01 bedient werden sollen.

Sind mehr als zwei Ebenen und dementsprechend mehr als zwei Abgabequerschnitte vorgesehen, so werden in wenigstens einer Drehrichtung des Rotors 07 zwei oder mehr Ebenen mit den in diesen angeschlossenen Leitungen 01 bedient. Dies kann beispielsweise zum Erhalt einer Gleichverteilung auf mehrere Leitungen 01 vorteilhaft sein, und/oder zur Verteilung bei entsprechend hoher Zahl angeschlossener Leitungen 01, die beispielsweise in einer Ebene nicht mehr oder nur unter erschwerten Bedingungen, beispielsweise erhöhtem konstruktivem Aufwand bedient werden könnten.

Der Rotor 07 kann in einem Gehäuse 101 drehbar angeordnet sein, welches in jedem der Abgabequerschnitte mindestens eine zum Rotor 07 hin offene Mündung wenigstens einer Leitung 01 aufweist. Erreichen die von einer anschiebenden Wand 04 um die Drehachse bewegten Körner bei ihrer überlagerten Bewegung parallel zur Drehachse das auf der entsprechenden Seite 41, 42 der anschiebenden Wand 04 angeordnete Abgabefenster 06 und überstreicht dieses eine Mündung im entsprechenden Abgabequerschnitt, so treten die Körner durch die jeweilige Mündungsöffnung in die eine oder mehreren hieran angeschlossenen Leitungen 01 ein, um am Ende der jeweiligen Leitung 01 aus dieser beispielsweise in einer Säschar wieder auszutreten.

Anstelle eines unmittelbaren Eintritts in eine Leitung 01 kann je Ebene ein konzentrisch um die Drehachse verlaufender Sammelkanal 17, 18 im Gehäuse 101 angeordnet sein. Je Sammelkanal 17, 18 können in den verschiedenen Ebenen eine unterschiedliche Anzahl von Leitungen 01 angeschlossen sein. Eine Leitung 01 kann dabei an mehr als einen Sammelkanal 17, 18 angeschlossen sein, so dass in sie sowohl bei Rotation des Rotors 07 in der einen, als auch bei Rotation des Rotors 07 in der anderen Drehrichtung Körner in diese Leitung 01 abgegeben werden (Fig. 1).

Der Sammelkanal 17, 18 kann beispielsweise zum Rotor 07 hin offen sein, so dass jedes auf einer Seite 41, 42 einer anschiebenden Wand 04 ein Abgabefenster 06 und damit einen Abgabequerschnitt erreichende Korn radial nach außen weg von der in den Sammelkanal 17, 18 fällt und von diesem aus in eine der an den Sammelkanal 17, 18 angeschlossenen Leitungen 01 abgegeben wird.

Indem an den dem ersten Abgabequerschnitt und dem zweiten Abgabequerschnitt zugeordneten Sammelkanälen 17, 18 eine unterschiedliche Anzahl von Leitungen 01 angeschlossen sind, werden je nachdem in welchem Abgabequerschnitt die Abgabe der Körner erfolgt unterschiedliche Anzahlen von Leitungen 01 bedient.

Somit kann je nach Drehrichtung festgelegt werden, welche einem Abgabequerschnitt zugeordnete Zahl von Leitungen 01 bedient werden soll.

Das zu zwei und mehr Ebenen gesagte gilt in diesem Zusammenhang auch in Verbindung mit den erwähnten Sammelkanälen 17, 18. Demnach ist die Verwendung von Sammelkanälen 17, 18 nicht auf zwei Ebenen beschränkt, auch hier können mehr als zwei Ebenen zum Einsatz kommen, von denen dann zumindest in einer Drehrichtung des Rotors 07 mehrere bedient werden.

Bei mehr als zwei Ebenen sind vorzugsweise mindestens zwei anschiebende Wände 04 vorgesehen.

Abwechselnd mit der oder den anschiebenden Wänden 04 können eine der Anzahl der anschiebenden Wände 04 entsprechende Zahl von Trennwänden 10 halb versetzt gleichmäßig über den Umfang des Rotors 07 verteilt ebenfalls radial nach innen zur Drehachse ragend angeordnet sein.

Diese verbessern die Trennung der Kornabgabe in den unterschiedlichen Ebenen, da durch sie die Körner auf der ihnen momentan zugewandten Seite 41, 42 der anschiebenden Wand 04 beispielsweise bei besonders hoher Dosierung und/oder einem geringen Abstand in Umfangsrichtung zwischen über den Umfang benachbarten gegenüberliegenden Seiten einer oder mehrerer anschiebender Wände 04 keine Möglichkeit haben, beispielsweise bei einer Anhäufung und/oder durch Mitnahme durch einen Luftstrom in ein einer anderen Ebene zugeordnetes Abgabefenster 06 zu fallen.

In jedem zwischen einer Seite 41, 42 einer anschiebenden Wand 04 und einer Trennwand 10 gebildeten Teil-Kanal befindet sich demnach nur ein Abgabefenster 06, welches darüber hinaus bevorzugt genau einer Ebene zugeordnet ist.

Vorzugsweise ist die Trennwand 10 in Richtung parallel zur Drehachse gesehen kürzer als die anschiebende Wand 04, wobei sie bevorzugt im selben Querschnitt wie die anschiebende Wand 04 endet, jedoch gegenüber einem Querschnitt, in dem die anschiebende Wand 04 anfängt, erst in einem hierauf in Bezug auf die Bewegungsrichtung der Körner beziehungsweise des kontinuierlichen Körnerstroms im Rotor 07 in Richtung parallel zur Drehachse folgenden Querschnitt beginnt.

Nach einer bestimmten Länge im Rotor 07 beziehungsweise in der Trommel kann demnach eine weitere Trennwand 10 kommen. Diese teilt die Trommel in weitere Teil-Kanäle auf und bestimmt, ob die Körner im oberen oder unteren Teil des Verteilerkopfes abgegeben werden.

Bei sehr schnell drehendem Rotor 07 kann es vorkommen, dass die Körner gar nicht mehr auf einer Seite der anschiebenden Wand 07 zum Anliegen kommen, da die Haftreibung an der durch die Innenwandung des Rotors 07 gebildeten Mantelfläche mit mit zunehmender Drehzahl steigender Zentripetalkraft überwiegt.

Um insbesondere bei schnell drehendem Rotor 07 Einflüsse der Haftreibung zu eliminieren, kann vorteilhaft eine radiale Fallstufe 09 vorgesehen sein.

Diese kann wie in Fig. 2, Fig. 8 in dem Rotor 07 angeordnet sein, und/oder wie in Fig. 1, Fig. 10, Fig. 11 zwischen der beispielsweise durch eine konzentrisch zur Längsachse 02 in den Rotor 07 führende Zufuhrleitung 20 und/oder einen axial verschiebbaren Steuerring 30 gebildete Einlassöffnung 110 und dem Rotor 07 angeordnet sein.

Durch die Fallstufe 09 wird die Haftreibung der Mantelfläche kurz unterbrochen.

Dadurch wird die Zuführung in die durch zwei oder mehr anschiebende Wände 04 und/oder Trennwände 10 voneinander getrennte Kanäle und/oder Teil-Kanäle besser sichergestellt.

Eine Aufteilung der Körner kann somit auch mit Hilfe einer Fallstufe 09 realisiert werden.

Durch das Verwenden eines Rotors 07 wird die Querverteilung in der Sämaschine verbessert.

Die Erfindung sieht vor, dass mit einer Richtungsänderung des Rotors die Fahrgassen geschaltet werden können.

Fahrgassenabschaltklappen werden daher überflüssig.

Bei einer weiteren Ausführung können sich hierbei zumindest in einer Partie des Rotors 07 nur die anschiebenden Wände 04 drehen und die zylindrische Außenfläche würde dabei feststehen. Hierbei wird noch besser sichergestellt, dass die Körner an die anschiebende Wand 04 gedrängt werden. Eine zumindest die Abgabequerschnitte einnehmende Abgabepartie des Rotors 07 ist in diesem Fall weiterhin mit einer Mantelfläche versehen, in welcher die Abgabefenster 06 angeordnet sind.

Die Erfindung ist insbesondere im Bereich der Herstellung landwirtschaftlicher Maschinen und Apparate, vor allem Verteilmaschinen, wie etwa Sämaschinen, insbesondere für die Drill- oder Mulchsaat, und/oder Düngerverteilmaschinen sowie Verteilvorrichtungen für solche Verteilmaschinen gewerblich anwendbar.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 01: Leitung
- 02: Längsachse
- 03: Auslassöffnung
- 04: anschiebende Wand
- 05: Abschnitt einer Mantelfläche
- 06: Abgabefenster
- 07: Rotor
- 08: Begrenzungswand
- 09: Fallstufe
- 10: Trennwand
- 11: Fläche
- 12: Fläche
- 13: Fläche
- 14: Fläche
- 15: Fläche
- 16: Fläche
- 17: Sammelkanal
- 18: Sammelkanal
- 20: Zufuhrleitung
- 30: Steuerring
- 31: Leitelement
- 41: erste Seite
- 42: zweite Seite
- 51: Abschnitt einer Mantelfläche im Bereich der zweiten Auslassöffnung
- 52: Abschnitt einer Mantelfläche im Bereich der ersten Auslassöffnung
- 61: Abgabefenster
- 62: Abgabefenster
- 63: Abgabefenster
- 71: Rampe
- 72: Rampe
- 100: Vorrichtung
- 101: Gehäuse
- 107: rotationssymmetrische Partie
- 110: Einlassöffnung
- 117: erste Auslassöffnung
- 118: zweite Auslassöffnung

- I: Verfahrensschritt
- II: Verfahrensschritt
- III: Verfahrensschritt
- IV: Verfahrensschritt
- V: Verfahrensschritt
- VI: Verfahrensschritt
- VII: Verfahrensschritt
- VIII: Verfahrensschritt

- A: Pfeil
- B: Pfeil
- C: Pfeil
- D: Doppelpfeil
- E: Pfeil
- F: Pfeil
- G: Pfeil
- H: Pfeil
- J: Pfeil
- K: Pfeil
- L: Pfeil
- M: Pfeil
- N: Pfeil
- P: Pfeil
- Q: Pfeil
- T: Pfeil
- W: Doppelpfeil

## Patentansprüche

1. Vorrichtung (100) zur Verteilung körnigen Guts auf eine veränderliche Anzahl von Leitungen (01), mit:
- einem einen sich entlang einer Längsachse (02) erstreckenden, zumindest eine rotationssymmetrische Partie (107) aufweisenden Gehäuseinnenraum beherbergenden Gehäuse (101) mit mindestens einer Einlassöffnung (110), sowie mindestens einer entlang der Längsachse (02) von der Einlassöffnung beabstandet angeordneten ersten Auslassöffnung (117), an welche eine erste Anzahl von Leitungen (01) angeschlossen ist, und mit mindestens einer zwischen Einlassöffnung (110) und der ersten Auslassöffnung (117) angeordneten zweiten Auslassöffnung (118), an welche eine zweite Anzahl von Leitungen (01) angeschlossen ist, wobei sich zumindest die zweite Auslassöffnung (118) innerhalb der sich mit ihrer Symmetrieachse entlang der Längsachse (02) erstreckenden rotationssymmetrischen Partie (107) befindet,
- einem in dem Gehäuseinnenraum angeordneten, sich unter Einnahme zumindest eines Teils der rotationssymmetrischen Partie (107) entlang der Längsachse (02) erstreckenden und um diese drehbar angeordneten Rotor (07) mit mindestens einer radial nach innen zur Längsachse (02) hin gerichteten und/oder radial von der Längsachse (02) abstehenden anschiebenden Wand (04), welche in den entgegengesetzten Drehrichtungen des Rotors (07) mit je einer ihrer beiden gegenüberliegenden Seiten (41, 42) das körnige Gut eine Drehbewegung um die Längsachse (02) anschiebt,
- zumindest einen an einer Seite (41) der anschiebenden Wand (04) in Umfangsrichtung abstehend angeordneten Abschnitt (05, 51) einer die rotationssymmetrische Partie (107) des Gehäuseinnenraums zumindest im Bereich einer Auslassöffnung (118) nachbildenden Mantelfläche, auf welchem Abschnitt (05, 51) beim Anschieben des körnigen Guts in einer Drehrichtung des Rotors (07) dieses über die mindestens eine Auslassöffnung (118) hinweg transportiert wird, und
- im Bereich derselben Auslassöffnung die gegenüberliegenden Seite (42) der anschiebenden Wand (04), und im Bereich einer anderen Auslassöffnung dieselbe Seite (41) der anschiebenden Wand (04) frei von entsprechenden Abschnitten (05, 51, 52) einer die rotationssymmetrische Partie (107) des Gehäuseinnenraums zumindest im Bereich der Auslassöffnungen (117, 118) nachbildenden Mantelfläche sind.

2. Vorrichtung nach Anspruch 1, wobei an einer ersten Seite (41) der anschiebenden Wand (04) zumindest ein in Umfangsrichtung abstehender Abschnitt (05, 51) einer die rotationssymmetrische Partie (107) des Gehäuseinnenraums zumindest im Bereich der zweiten Auslassöffnung (118) nachbildenden Mantelfläche angeordnet ist, auf welchem Abschnitt (05, 51) beim Anschieben des körnigen Guts in einer ersten Drehrichtung des Rotors (07) dieses über die mindestens eine zweite Auslassöffnung (118) hinweg transportiert wird und die mindestens eine erste Auslassöffnung (117) erreicht, durch welche es dann an die erste Anzahl hieran angeschlossener Leitungen (01) abgegeben wird.

3. Vorrichtung nach Anspruch 2, wobei an einer der ersten Seite (41) gegenüberliegenden zweiten Seite (42) der anschiebenden Wand (04) in Umfangsrichtung unter Freihaltung des Bereichs der zweiten Auslassöffnung abstehend zumindest ein Abschnitt (05, 52) einer die rotationssymmetrische Partie (107) des Gehäuseinnenraums zumindest im Bereich der ersten Auslassöffnung (117) nachbildenden Mantelfläche angeordnet ist, welcher Abschnitt (05, 52) beim Anschieben des körnigen Guts in einer der ersten Drehrichtung entgegengesetzten zweiten Drehrichtung dieses daran hindert, bei einem zumindest teilweisen Weitertransport entlang der Längsachse (02) den Gehäuseinnenraum durch die mindestens eine erste Auslassöffnung (117) zu verlassen.

4. Vorrichtung nach Anspruch 2 oder 3, wobei an einer der ersten Seite (41) gegenüberliegenden zweiten Seite (42) der anschiebenden Wand (04) in Umfangsrichtung unter Freihaltung des Bereichs der zweiten Auslassöffnung (118) zumindest eine in einem normal zur Längsachse (02) angeordneten Querschnitt liegende Begrenzungswand (08) absteht, welche beim Anschieben des körnigen Guts in einer der ersten Drehrichtung entgegengesetzten zweiten Drehrichtung dieses an einem zumindest teilweisen Weitertransport entlang der Längsachse (02) hin zu einer ersten Auslassöffnung (117) hindert.

5. Vorrichtung nach Anspruch 1, 2, 3 oder 4, wobei unmittelbar angrenzend an die anschiebende Wand (04) der Bereich der ersten Auslassöffnung (117) auf der ersten Seite (41) der anschiebenden Wand (04) und der Bereich der zweiten Auslassöffnung (118) auf der zweiten Seite (42) der anschiebenden Wand (04) frei von Abschnitten einer die rotationssymmetrische Partie (107) des Gehäuseinnenraums zumindest im Bereich der Auslassöffnungen (117, 118) nachbildenden Mantelfläche ist.

6. Vorrichtung nach einem der Ansprüche 1 bis 5, wobei der Rotor (07) und/oder ein konzentrisch zum Rotor angeordneter Steuerring (30) relativ zueinander in Richtung parallel zur Längsachse (02) beweglich angeordnet sind.

7. Vorrichtung nach einem der Ansprüche 1 bis 6, wobei sie eine radiale Fallstufe (09) in dem Rotor (07) und/oder zwischen Einlassöffnung (110) und dem Rotor (07) aufweist.

8. Vorrichtung nach einem der Ansprüche 1 bis 7, wobei mindestens eine Trennwand (10) parallel zwischen einander von Angesicht zu Angesicht gegenüberstehenden Seiten (41, 42) mindestens einer anschiebenden Wand (04) angeordnet ist.

## Claims

1. A device (100) for distributing granular material to a variable number of lines (01), comprising:
- a housing (101), which extends along a longitudinal axis (02) and which accommodates a housing interior having at least one rotationally symmetrical part (107), having at least one inlet opening (110) and a first outlet opening (117), which is arranged distanced from the inlet opening along the longitudinal axis (02) and to which there is connected a first number of lines (01), and having at least one second outlet opening (118), which is arranged between the inlet opening (110) and the first outlet opening (117) and to which there is connected a second number of lines (01), wherein at least the second outlet opening (118) is located within the rotationally symmetrical part (107) extending with its axis of symmetry along the longitudinal axis (02),
- a rotor (07) arranged in the housing interior, extending with at least partial engagement within part of the rotationally symmetrical part (107) along the longitudinal axis (02) and arranged rotatably about same, said rotor having at least one pushing wall (04) directed radially inwardly towards the longitudinal axis (02) and/or protruding radially from the longitudinal axis (02), which pushing wall pushes the granular material in a rotary movement about the longitudinal axis (02) by means of one of its two opposite sides (41, 42) respectively in each of the opposite directions of rotation of the rotor (07),
- at least one portion (05, 51), arranged on one side (41) of the pushing wall (04) protruding in the circumferential direction, of a lateral surface emulating the rotationally symmetrical part (107) of the housing interior at least in the region of an outlet opening (118), on which portion (05, 51) the granular material is transported past the at least one outlet opening (118) as it is pushed in a direction of rotation of the rotor (07), and
- in the region of the same outlet opening, the opposite side (42) of the pushing wall (04), and in the region of another outlet opening, the same side (41) of the pushing wall (04) are free from corresponding portions (05, 51, 52) of a lateral surface emulating the rotationally symmetrical part (107) of the housing interior at least in the region of the outlet openings (117, 118).

2. The device according to claim 1, wherein at least one portion (05, 51), protruding in the circumferential direction, of a lateral surface emulating the rotationally symmetrical part (107) of the housing interior at least in the region of the second outlet opening (118) is arranged on a first side (41) of the pushing wall (04), on which portion (05, 51) the granular material, when pushed in a first direction of rotation of the rotor (07), is transported past the at least one second outlet opening (118) and reaches the at least one first outlet opening (117), through which it is then discharged to the first number of lines (01) connected hereto.

3. The device according to claim 2, wherein at least one portion (05, 52) of a lateral surface emulating the rotationally symmetrical part (107) of the housing interior in the region of the first outlet opening (117) is arranged on a second side (42) of the pushing wall (04) opposite the first side (41) in a manner protruding in the circumferential direction whilst keeping free the region of the second outlet opening, which portion (05, 52), when pushing the granular material in a second direction of rotation opposite the first direction of rotation, prevents said material from leaving the housing interior through the at least one first outlet opening (117) with an at least partial further transport along the longitudinal axis (02).

4. The device according to claim 2 or 3, wherein at least one delimiting wall (08), which lies in a cross-section arranged perpendicular to the longitudinal axis (02) and which, when pushing the granular material in a second direction of rotation opposite the first direction of rotation, at least partially prevents said material from being further transported along the longitudinal axis (02) towards a first outlet opening (117), protrudes on a second side (42) of the pushing wall (04), opposite the first side (41), in the circumferential direction whilst keeping free the region of the second outlet opening (118).

5. The device according to claim 1, 2, 3 or 4, wherein, directly adjacently to the pushing wall (04), the region of the first outlet opening (117) on the first side (41) of the pushing wall (04) and the region of the second outlet opening (118) on the second side (42) of the pushing wall (04) is free from portions of a lateral surface emulating the rotationally symmetrical part (107) of the housing interior at least in the region of the outlet openings (117, 118).

6. The device according to any one of claims 1 to 5, wherein the rotor (07) and/or a control ring (30) arranged concentrically with the rotor are arranged moveably relative to one another in a direction parallel to the longitudinal axis (02).

7. The device according to any one of claims 1 to 6, wherein it has a radial fall stage (09) in the rotor (07) and/or between the inlet opening (110) and the rotor (07).

8. The device according to any one of claims 1 to 7, wherein at least one partition wall (10) is arranged parallel between sides (41, 42) of at least one pushing wall (04) facing one another face-to-face.

## Revendications

1. Dispositif (100) destiné à répartir un produit en grains sur un nombre variable de conduites (01), comprenant :
- un boîtier (101) logeant un espace interne de boîtier présentant au moins une partie à symétrie de rotation (107) et s'étendant le long d'un axe longitudinal (02) avec au moins une ouverture d'entrée (110), ainsi qu'au moins une première ouverture de sortie (117) disposée à distance de l'ouverture d'entrée le long de l'axe longitudinal (02), à laquelle un premier nombre de conduites (01) est raccordé et avec au moins une deuxième ouverture de sortie (118) disposée entre l'ouverture d'entrée (110) et la première ouverture de sortie (117), à laquelle un deuxième nombre de conduites (01) est raccordé, la deuxième ouverture de sortie (118) se trouvant au moins à l'intérieur de la partie à symétrie de rotation (107) s'étendant avec son axe de symétrie le long de l'axe longitudinal (02),
- un rotor (07) disposé dans l'espace interne de boîtier, s'étendant en prise avec au moins une partie de la partie à symétrie de rotation (107) le long de l'axe longitudinal (02) et agencé rotatif autour de celui-ci, avec au moins une paroi (04) orientée radialement vers l'intérieur par rapport à l'axe longitudinal (02) et/ou ayant une action de poussée, radialement en saillie de l'axe longitudinal (02), qui pousse dans la direction de rotation inverse du rotor (07) avec respectivement un de ses deux côtés opposés (41, 42) le produit en grains dans un mouvement de rotation autour de l'axe longitudinal (02),
- au moins une section (05, 51) disposée à distance sur un côté (41) de la paroi à action de poussée (04) dans la direction circonférentielle d'une surface d'enveloppe reproduisant la partie à symétrie de rotation (107) de l'espace interne de boîtier au moins dans la zone d'une ouverture de sortie (118), sur laquelle section (05, 51), lors de la poussée du produit en grains dans une direction de rotation du rotor (07), celui-ci est transporté au-delà de la au moins une ouverture de sortie (118) et
- dans la zone de la même ouverture de sortie, le côté opposé (42) de la paroi à action de poussée (04) et dans la zone d'une autre ouverture de sortie, ledit côté (41) de la paroi à action de poussée (04) sont dépourvus de sections correspondantes (05, 51, 52) d'une surface d'enveloppe reproduisant la partie à symétrie de rotation (107) de l'espace interne de boîtier, au moins dans la zone des ouvertures de sortie (117, 118).

2. Dispositif selon la revendication 1, dans lequel, sur un premier côté (41) de la paroi à action de poussée (04), est disposée au moins une section (05, 51) suivant la direction circonférentielle d'une surface d'enveloppe reproduisant la partie à symétrie de rotation (107) de l'espace interne de boîtier, au moins dans la zone de la deuxième ouverture de sortie (118), sur laquelle section (05, 51), lors de la poussée du produit en grains dans une première direction de rotation du rotor (07), celui-ci est transporté au-delà de la au moins une deuxième ouverture de sortie (118) et atteint la au moins une première ouverture de sortie (117), à travers laquelle il est distribué au premier nombre de conduites (01) qui y sont raccordées.

3. Dispositif selon la revendication 2, dans lequel, sur un deuxième côté (42) opposé au premier côté (41) de la paroi à action de poussée (04) situé dans la direction circonférentielle en laissant libre la zone de la deuxième ouverture de sortie, est disposée au moins une section (05, 52) d'une surface d'enveloppe reproduisant la partie à symétrie de rotation (107) de l'espace interne de boîtier au moins dans la zone de la première ouverture de sortie (117), laquelle section (05, 52), lors de la poussée du produit en grains dans une deuxième direction de rotation opposée à la première direction de rotation empêche celui-ci de sortir à travers la au moins une première ouverture de sortie (117), lors d'un transport ultérieur au moins partiel le long de l'axe longitudinal (02) de l'espace interne de boîtier.

4. Dispositif selon la revendication 2 ou 3, dans lequel, sur un deuxième côté (42) opposé au premier côté (41) de la paroi à action de poussée (04) dans la direction circonférentielle en laissant libre la zone de la deuxième ouverture de sortie (118), est disposée une paroi de limitation (08) se trouvant dans un plan transversal disposé orthogonalement à l'axe longitudinal (02), qui, lors de la poussée du produit en grains dans une deuxième direction de rotation opposée à la première direction de rotation, empêche celui-ci d'atteindre une première ouverture de sortie (117) lors d'un transport ultérieur au moins partiel le long de l'axe longitudinal (02).

5. Dispositif selon la revendication 1, 2, 3 ou 4, dans lequel, directement à côté de la paroi à action de poussée (04), la zone de la première ouverture de sortie (117) sur le premier côté (41) de la paroi à action de poussée (04) et la zone de la deuxième ouverture de sortie (118) sur le deuxième côté (42) de la paroi à action de poussée (04) sont dépourvues de sections d'une surface d'enveloppe reproduisant la partie à symétrie de rotation (107) de l'espace interne de boîtier au moins dans la zone des ouvertures de sortie (117, 118).

6. Dispositif selon l'une quelconque des revendications 1 à 5, dans lequel le rotor (07) et/ou une bague de commande (30) disposée de façon concentrique sur le rotor sont disposés mobiles l'un par rapport à l'autre dans une direction parallèle à l'axe longitudinal (02).

7. Dispositif selon l'une quelconque des revendications 1 à 6, le dispositif présentant une chute radiale (09) dans le rotor (07) et/ou entre l'ouverture d'entrée (110) et le rotor (07).

8. Dispositif selon l'une quelconque des revendications 1 à 7, dans lequel au moins une paroi de séparation (10) est disposée en parallèle entre des côtés (41, 42) opposés en face à face d'au moins une paroi à action de poussée (04).
